# EUROPEAN PATENT APPLICATION

(11) **EP 4 503 620 A1**
(43) Date of publication of application: **05.02.2025**
(21) Application number: 23306340.3
(22) Date of filing: 04.08.2023
(51) Int. Cl.: H04N 21/258, H04N 21/2668, H04N 21/6547, H04N 21/658, H04N 21/854, H04N 21/8543

(54) **METHODS FOR MULTIMEDIA DATA DELIVERY AND APPARATUSES FOR IMPLEMENTING THE SAME**

(71) Applicant: ATEME, 78140 Velizy Villacoublay (FR)
(72) Inventor: BURDINAT, Christophe, 69003 LYON (FR); OUTTERS, Jan-David, 78960 VOISINS LE BRETONNEUX (FR)
(74) Representative: Plasseraud IP

(57) **Abstract**

A method for delivering multimedia data to a user device of a multimedia data delivery system is proposed, which comprises, by a server device of the multimedia data delivery system, transmitting, to the user device, data related to customization capabilities of the server device, receiving, from the user device, a query message for multimedia data, wherein the query message includes a parameter related to customization of multimedia data, and upon receiving the query message, generating a response message which includes multimedia data customized, based on the parameter and the customization capabilities of the server device, for transmission to the user device.

## Description

The present disclosure relates to the field of multimedia data delivery.

Media consumption is increasingly shifting from traditional broadcast TV (over-the-air, satellite, and cable) to so-called over-the-top (OTT) streaming over the public Internet. The antennas and set-top boxes associated with traditional TVs are replaced by software media players that run on smartphones, tablets, PCs, connected TVs and game consoles.

Free Ad-Supported Streaming Television (FAST) designates a set of linear streaming television services offered to users for free (without a subscription), with content being personalized for the targeted user. FAST is funded by advertising, so that users of FAST receive advertisement content in addition to their streamed multimedia content.

FAST channels allow content providers to distribute multimedia content in linear channels that are personalized to users. A live personalized channel viewing can therefore be offered to users of FAST channels.

It would be advantageous to improve the management of FAST services, so as to widen the technical frameworks in which distribution of personalized multimedia content distribution services, such as for example through FAST channels, may be offered and delivered.

There is therefore a need for providing an improved multimedia data delivery scheme and apparatus and software implementing the same that address at least some of the above-described drawbacks and shortcomings of the conventional technology in the art.

It is an object of the present subject disclosure to provide an improved multimedia data delivery scheme and apparatuses implementing the same.

Another object of the present subject disclosure is to provide an improved multimedia data delivery scheme and apparatuses implementing the same for alleviating the above-described drawbacks and shortcomings of conventional multimedia data delivery schemes.

Yet another object of the present subject disclosure is to provide an improved scheme for distribution of personalized multimedia content distribution services, such as for example through FAST channels.

Yet another object of the present subject disclosure is to provide an improved multimedia data delivery scheme in which support for FAST services may be implemented, and apparatuses implementing the same.

To achieve these objects and other advantages and in accordance with the purpose of the present subject disclosure, as embodied and broadly described herein, in one aspect of the present subject disclosure, a computer-implemented method for delivering multimedia data to a user device of a multimedia data delivery system is proposed, which comprises: transmitting, to the user device, data related to customization capabilities of a server device of the multimedia data delivery system; receiving, by the server device, a query message for multimedia data from the user device, wherein the query message includes a parameter related to customization of multimedia data; and upon receiving the query message, generating, by the server device, a response message which includes multimedia data customized based on the parameter and the customization capabilities of the server device, for transmission to the user device.

According to another aspect of the present subject disclosure, a computer-implemented method for delivering multimedia data to a user device of a multimedia data delivery system is proposed, which comprises, by a server device of the multimedia data delivery system: transmitting, to the user device, data related to customization capabilities of the server device; receiving, from the user device, a query message for multimedia data, wherein the query message includes a parameter related to customization of multimedia data; and upon receiving the query message, generating a response message which includes multimedia data customized based on the parameter and the customization capabilities of the server device, for transmission to the user device.

In one or more embodiments, the proposed method may further comprise: transmitting, by the server device, to the user device, the response message.

In one or more embodiments, the proposed method may further comprise: receiving, from the user device, a request for customization capabilities of the server device, and the data related to customization capabilities may be transmitted to the user device in response to the request.

In one or more embodiments, the data related to customization capabilities may be transmitted through signaling transmitted to the user device.

In one or more embodiments, the data related to customization capabilities may be signaled to the user device through metadata transmitted to the user device, and the metadata may include a URL of the data related to customization capabilities.

According to yet another aspect of the present subject disclosure, a computer-implemented method for managing delivery of multimedia data to a user device of a multimedia data delivery system is proposed, which comprises, by the user device: obtaining data related to customization capabilities of a server device of the multimedia data delivery system; based on the data related to customization capabilities of the server device, generating a query message for multimedia data, wherein the query message includes a parameter related to customization of multimedia data; and transmitting the query message to the server device.

In one or more embodiments, the proposed method may further comprise: receiving, from the server device, a response message which includes multimedia data customized according to the parameter.

In one or more embodiments, the proposed method may further comprise: transmitting, to the server device, a request for customization capabilities of the server device. Obtaining the data related to customization capabilities of the server device may comprise receiving the data related to customization capabilities in response to the request.

In one or more embodiments, the data related to customization capabilities may be obtained through signaling transmitted to the user device by the server device.

In one or more embodiments, the data related to customization capabilities may be obtained through a response to the user device by the server device to a request by the user device to the server on customization capabilities.

In one or more embodiments, the data related to customization capabilities may be obtained through metadata received by the user device, and the metadata may include a URL of the data related to customization capabilities.

Advantageously, data related to customization capabilities of the server device may be provided to the user device, so that the user device may be informed as to customization capabilities of the server device. The user device can therefore use the data related to customization capabilities of the server device to generate and transmit to the server device a query message for multimedia data which includes a parameter related to customization of multimedia data (e.g. a query message for customized multimedia data).

Data related to customization capabilities of the server device may be provided to the user device through signaling, for example of signaling data provided to all client devices of the multimedia data delivery system. The server device may therefore advantageously announce its capabilities for support for customized requests.

The proposed scheme further advantageously allows querying, at a user device of a multimedia data delivery system, multimedia data delivery function implemented by a server device of the multimedia data delivery system, for customized multimedia data according to data related to customization capabilities of the server device. Data related to customization capabilities of the server device may therefore be provided to the user device upon request from the user device.

Advantageously, in some embodiments, the user device may therefore be configured to interrogate the server regarding its capabilities related to customized requests, for example through a request to the server for data related to customization capabilities of the server, and to further request multimedia data (which may include metadata regarding multimedia content data) customized based on one or more customization parameters based on obtained data related to customization capabilities of the server.

The proposed scheme therefore improves efficiency of delivery of multimedia data to the user device, as it reduces occurrences of a situation where a client device requests multimedia data customized based on one or more customization parameters that are not supported by the service device.

The present disclosure is advantageously applicable to different types of customization, including without being limited to related to an image format, an image processing, an identifier (e.g. a customer identifier or user identifier), sign language accessibility, high contrast audio description, immersive content, immersive services, etc.

As another advantage of the proposed scheme, a Digital Video Broadcast-Internet (DVB-I) framework may be configured to implement the proposed scheme, so that, thanks to the proposed scheme, a DVB-I service may include management of customized queries (e.g. for specific users, specific user device features, user profiles, and group of users). Customization (e.g. personalization) may therefore be enabled in a DVB-I framework through use of a customization parameter included in a query message (e.g. requesting multimedia data) as proposed according to embodiments of the present subject disclosure.

In one or more embodiments, the data related to customization capabilities of the server device may comprise one or more of a customization profile supported by the server device to be used for a query for customized multimedia data.

In one or more embodiments, the parameter related to customization of multimedia data may relate to one or more of: : an image format, an identifier, a video format, a content language, a metadata language, and accessibility.

In one or more embodiments, the parameter related to customization of multimedia data may include one or more elements in a XML format, a YAML format, or a JSON format.

In one or more embodiments, the multimedia data delivery system may include a Digital Video Broadcasting - Internet, DVB-I, system, and the query message may be a DVB-I query.

In one or more embodiments, the user device may implement a Digital Video Broadcasting - Internet, DVB-I, client, and the query message may be a DVB-I query.

In another aspect of the present subject disclosure, an apparatus is proposed, which comprises a processor, and a memory operatively coupled to the processor, wherein the apparatus is configured to perform a method according to one or more embodiments proposed in the present subject disclosure.

In yet another aspect of the present subject disclosure, a non-transitory computer-readable medium encoded with executable instructions which, when executed, causes an apparatus comprising a processor operatively coupled with a memory, to perform a method according to one or more embodiments proposed in the present subject disclosure, is proposed.

For example, in some embodiments, the present subject disclosure provides a non-transitory computer-readable medium encoded with executable instructions which, when executed, causes an apparatus comprising a processor operatively coupled with a memory, to perform a method for delivering multimedia data to a user device of a multimedia data delivery system which comprises transmitting, by the processor, to the user device, data related to customization capabilities of a server device of the multimedia data delivery system; receiving, by the processor, a query message for multimedia data from the user device, wherein the query message includes a parameter related to customization of multimedia data; and upon receiving the query message, generating, by the processor, a response message which includes multimedia data customized based on the parameter and the customization capabilities of the server device, for transmission to the user device.

As another example, in some embodiments, the present subject disclosure provides a non-transitory computer-readable medium encoded with executable instructions which, when executed, causes an apparatus comprising a processor operatively coupled with a memory, to perform a computer-implemented method for delivering multimedia data to a user device of a multimedia data delivery system, which comprises, by a server device of the multimedia data delivery system: transmitting, by the processor, to the user device, data related to customization capabilities of the server device; receiving, by the processor, from the user device, a query message for multimedia data, wherein the query message includes a parameter related to customization of multimedia data; and upon receiving the query message, generating, by the processor, a response message which includes multimedia data customized based on the parameter and the customization capabilities of the server device, for transmission to the user device.

As yet another example, in some embodiments, the present subject disclosure provides a non-transitory computer-readable medium encoded with executable instructions which, when executed, causes an apparatus comprising a processor operatively coupled with a memory, to perform a method for managing delivery of multimedia data to a user device of a multimedia data delivery system which comprises, at the user device: obtaining, by the processor, data related to customization capabilities of a server device of the multimedia data delivery system; based on the data related to customization capabilities of the server device, generating, by the processor, a query message for multimedia data, wherein the query message includes a parameter related to customization of multimedia data; and transmitting, by the processor, the query message to the server device.

In yet another aspect of the present subject disclosure, a computer program product comprising computer program code tangibly embodied in a computer readable medium, said computer program code comprising instructions to, when provided to a computer system and executed, cause said computer to perform a method according to an embodiment proposed in the present subject disclosure, is proposed.

In another aspect of the present subject disclosure, a data set representing, for example through compression or encoding, a computer program as proposed in the present subject disclosure, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1a shows an exemplary multimedia data delivery system that may be used for implementing one or more embodiments of the present subject disclosure;
Figure 1b shows a schematic diagram illustrating an exemplary request-response data communication exchange between a server and a client according to one or more embodiments of the present subject disclosure;
Figure 2a is a block schematic diagram illustrating an exemplary method for delivering multimedia data to a user device according to one or more embodiments of the present subject disclosure;
Figure 2b is a block schematic diagram illustrating an exemplary method for managing delivery of multimedia data to a user device according to one or more embodiments of the present subject disclosure;
Figure 3a illustrates an exemplary DVB-I use case according to one or more embodiments of the present subject disclosure;
Figure 3b illustrates another exemplary DVB-I use case according to one or more embodiments of the present subject disclosure;
Figure 3c illustrates another exemplary DVB-I use case according to one or more embodiments of the present subject disclosure;
Figure 3d illustrates another exemplary DVB-I use case according to one or more embodiments of the present subject disclosure;
Figure 3e illustrates another exemplary DVB-I use case according to one or more embodiments of the present subject disclosure;
Figure 3f illustrates another exemplary DVB-I use case according to one or more embodiments of the present subject disclosure;
Figure 3g illustrates another exemplary DVB-I use case according to one or more embodiments of the present subject disclosure;
Figure 3h illustrates another exemplary DVB-I use case according to one or more embodiments of the present subject disclosure;
Figure 3i illustrates an exemplary XML response document list capabilities of a server device according to one or more embodiments of the present subject disclosure;
Figure 4a illustrates an exemplary server apparatus according to one or more embodiments;
Figure 4b illustrates an exemplary client apparatus according to one or more embodiments.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to devices, functions, engines, block diagrams and flowchart illustrations of the methods, devices, systems, and computer program according to one or more exemplary embodiments. Each described device, function, engine, block of the block diagrams and flowchart illustrations can be implemented in hardware, software, firmware, middleware, microcode, or any suitable combination thereof. If implemented in software, the devices, functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms "memory" and "computer storage media" include any type of data storage device, such as, without limitation, a hard drive, a flash drive or other flash memory devices (e.g. memory keys, memory sticks, key drive), CD-ROMs or other optical data storage devices, DVDs, magnetic disk data storage devices or other magnetic data storage devices, data memory components, RAM, ROM and EEPROM memories, memory cards (smart cards), solid state drive (SSD) memories, and any other form of medium able to be used to transport or store or memorize data or data structures able to be read by a computer processor, or a combination thereof. Furthermore, various forms of computer-readable media may transmit or carry instructions to a computer, such as a router, a gateway, a server, or any data transmission equipment, whether this involves wired transmission (via coaxial cable, optical fibre, telephone wires, DSL cable or Ethernet cable), wireless transmission (via infrared, radio, cellular, microwaves) or virtualized transmission equipment (virtual router, virtual gateway, virtual tunnel end, virtual firewall). According to the embodiments, the instructions may comprise code in any computer programming language or computer program element, such as, without limitation, the languages of assembler, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs. The terms "in particular", "for example", "example", "typically" are used in the present description to denote examples or illustrations of non-limiting embodiments that do not necessarily correspond to preferred or advantageous embodiments with respect to other possible aspects or embodiments.

The terms "operationally coupled", "coupled", "mounted", "connected" and their various variants and forms used in the present description refer to couplings, connections and mountings that may be direct or indirect, and comprise in particular connections between electronic equipment or between portions of such equipment that allow operations and modes of operation as described in the present description. In addition, the terms "connected" and "coupled" are not limited to physical or mechanical connections or couplings. For example, an operational coupling may include one or more wired connection(s) and/or one or more wireless connection(s) between two or more items of equipment that allow simplex and/or duplex communication links between the equipment or portions of the equipment. According to another example, an operational coupling or a connection may include a wired-link and/or wireless coupling for allowing data communications between a server of the proposed system and another item of equipment of the system.

"Server" or "platform" in the present subject disclosure means any (virtualized or non-virtualized) point of service or computer device or system performing data processing operations, one or more databases, and/or data communication functions. For example, and without limitation, the term "server" or the term "platform" may refer to a physical processor operationally coupled to associated communication, database and data storage functions, or refer to a network, a group, a set or a complex of processors and associated data storage and networking equipment, and to an operating system and one or more database system(s) and application software supporting the services and functions provided by the server. A server or platform may be configured to operate in or as part of a cloud computing environment. A computer device or system may be configured so as to send and receive signals, via wireless and/or wired transmission networks(s), or be configured so as to process and/or store data or signals, and may therefore operate as a server. Equipment configured so as to operate as a server may thus include, by way of non-limiting example, dedicated servers mounted on a rack, cloud-based servers, desktop computers, laptop computers, service gateways (sometimes called "box" or "home gateway"), multimedia decoders (sometimes called "set-top boxes"), integrated equipment combining various functionalities, such as two or more of the abovementioned functionalities. The servers may vary greatly in terms of their configuration or their capabilities, but a server will generally include one or more central processing unit(s) and a memory. A server may also include one or more item(s) of mass memory equipment, one or more electric power supply/supplies, one or more wireless and/or wired network interface(s), one or more input/output interface(s), one or more operating system(s), such as Windows Server, Mac OS X, Unix, Linux, FreeBSD, or an equivalent. In particular, in embodiments using a DVB-I framework, a server device may typically implement a DVB-I Server as defined in the DVB-I specifications and standards (such as, for example, the DVB A177r3 document dated September 2022). A server device according to embodiments of the present subject disclosure may also implement an improved DVB-I Server configured for implementing a proposed method according to embodiments of the present subject disclosure.

The terms "application," "program," or "application program" (AP) and their variants ("app", "web app", etc.) as used in the present description correspond to any tool that operates and is operated by way of a computer in order to provide or execute one or more function(s) or task(s) for a user or another application program. In order to interact with an application program and control it, a user interface may be provided on the equipment on which the application program is implemented. For example, a graphical user interface (or GUI) may be generated and displayed on a screen of the user equipment, or an audio user interface may be played back to the user using a speaker, a headset or an audio output.

In the present description, the terms "multimedia content" are used to denote or refer to any audio and/or video or audiovisual content or data, with or without closed captions, open captions, subtitles, timed text, visual descriptors, interactive graphic interfaces, and any combination thereof.

In the present description, the terms "multimedia data" are used to denote or refer to any multimedia content data or metadata related to multimedia content or multimedia content data (such as for example metadata describing data of one or more multimedia files (e.g. comprising multimedia content)), and any combination thereof. Multimedia data may typically be comprised in a XML file comprising metadata related to multimedia content, and refer to links to multimedia files. As another example, multimedia data may refer to a link or a resource locator (e.g. a URL) to one or more multimedia files comprising multimedia content.

In the present description, the terms "real-time" distribution, distribution "in linear mode", distribution "in linear TV mode", distribution "in dynamic mode" and "live" distribution or distribution "in live mode" are used interchangeably to denote or refer to the distribution in live mode or dynamic mode of multimedia content in a content distribution system to user devices, comprising in particular the distribution of the content as it is generated, as opposed to distributing content previously generated, upon an access request from a user (distribution upon an access request or "static" distribution or distribution in static mode), such as for example content recorded on a server and made available to users by a video on demand (VOD) service. Multimedia content, such as for example carried by a FAST channel, may also have been previously encoded, and may be made available for distribution in linear mode to user devices on a multimedia content database.

In the present description, the terms "live content" or "live channel" are used interchangeably to denote or refer to corresponding content, for example multimedia content, of a multimedia content stream, that is distributed, for example using an Over-The-Top (OTT) distribution mode, in dynamic mode (as opposed to the static distribution mode). Live content will typically be generated by a television station, or by any type of television medium, and may also be distributed on a multimedia content broadcast network, in addition to being made available on content servers in an OTT distribution system. In some embodiments, a live channel, such as, for example, a FAST channel, may be generated from a main multimedia content flow distributed in broadcast (e.g. DVB-T/T2) combined with personalization items (e.g. personalized advertisement multimedia content) inserted in the main multimedia content flow and delivered over IP networks (in broadband).

In the present description, the terms "client", "user device", "client device", "viewing device", and "client unit" are used interchangeably to denote any type of user equipment (such as, without limitation, any computer device, smartphone, tablet, personal computer, laptop, television set, etc.) implemented by one or more items of software, one or more items of hardware, or a combination or one or more items of software and one or more items of hardware, configured to use multimedia content distributed in a multimedia data delivery system, which may in some embodiments implement one or more of generating a query message according to embodiments of the present subject disclosure, and receiving responses to such query message. A user device may typically embed a middleware/operating system on which a player is implemented. In particular, in embodiments using a DVB-I framework, a user device may typically implement a DVB-I Client (for example through its player) as defined in the DVB-I specifications and standards (such as, for example, the DVB A177r3 document dated September 2022). A user device according to embodiments of the present subject disclosure may also implement an improved DVB-I Client configured for implementing a proposed method according to embodiments of the present subject disclosure.

The terms "network" and "communication network" as used in the present description refer to one or more data links that may couple or connect possibly virtualized equipment so as to allow electronic data to be transported between computer systems and/or modules and/or other devices or electronic equipment, such as between a server and a user device or other types of devices, including between wireless devices that are coupled or connected via a wireless network, for example. A network may also include a mass memory for storing data, such as a NAS (network attached storage), a SAN (storage area network) or any other form of computer-readable or machine-readable medium, for example. A network may comprise, in full or in part, the Internet, one or more local area networks (LAN), one or more wide area networks (WAN), wired connections, wireless connections, cellular connections or any combination of these various networks. Similarly, subnetworks may use various architectures or conform with or be compatible with various protocols and interoperate with larger networks. Various types of equipment may be used to make various architectures or various protocols interoperable. For example, a router may be used to provide a communication link or a data link between two LANs that would otherwise be separate and independent.

The terms "customization profile" as used in the present description correspond to any set of customization parameters that may be defined in relation customization of multimedia data.

The DVB Project is an industry-led consortium which develops a suite of open and interoperable specifications for the global delivery of digital media and broadcast services, known as the suite of DVB ("Digital Video Broadcast") specifications. DVB specifications cover all aspects of digital television and include DVB-Internet (DVB-I) specifications for offering standard-based solutions for the delivery of television services (live, linear and on-demand services) to internet connected devices. DVB-I can be used by a wide range of television service providers, including terrestrial broadcasters, satellite operators, cable operators, and OTT service providers.

The DVB-I standards are based on related technical specifications typically referred as BlueBooks. The DVB-I specifications provide a data format that is compatible with a large variety of devices, running from a traditional TV set and a set-top box to smartphones, tablets and laptops, thereby specifying a user interface through which common content can be provided to any internet-connected device. Included in the set of DVB-I technical specifications is the DVB-I specification entitled "DVB-I Service Discovery - Service Discovery and Programme Metadata for DVB-I". This specification defines signalling of linear TV or radio services and content that are delivered over broadband, access to linear TV services that are delivered by broadband in a way that is consistent with their access to linear TV services delivered by RF-based DVB technologies, the metadata and mechanisms to present electronic programme guides, the integration of linear services delivered by the RF-based DVB tuner and linear services delivered by broadband into a single coherent offering that is accessed through a single consistent UI, and a method for national TV regulators or their representatives, operators and trademark licensors to offer a list of trusted/legitimate/authorized/regulated services. Its corresponding latest published standard is ETSI TS 103 770 V1.1.1, dated November 2020, while its corresponding latest BlueBook is the DVB Document A177 Rev.4 (Interim draft TS 103 770 V.1.2.1) entitled "Service Discovery and Programme Metadata for DVB-I," dated September 2022. This specification document defines *inter alia* internet-centric mechanisms to signal and discover linear television services, whether delivered over IP networks (broadband) or through broadcast mechanisms. Further details regarding this specification and corresponding standard may be found at the following URL: https://dvb.org/?standard=service-discovery-and-programme-metadata-for-dvb-i.

The proposed methods may be implemented by any user device at one end, and any server device at the other end, of a multimedia data delivery system configured for exchanging service list data through one or more communication networks, for example in a client-server framework, through one or more client-server exchanges, such as, for example, an improved DVB-I client implemented in a user device and an improved DVB-I server (e.g. implementing a Service List Registry (SLR) function or a Service List Server (SLS) function) compliant with DVB-I specifications or standards, whether in their existing versions and/or their evolutions, as the case may be adapted (and thereby improved) for implementing one or more embodiments of the proposed methods.

Although parts of the following description focus on embodiments of the present subject disclosure in a DVB-I framework, it will be appreciated by those having ordinary skill in the relevant art that any suitable service discovery framework, or multimedia service signaling framework, may be used in place of the DVB-I framework which is given by way of example only.

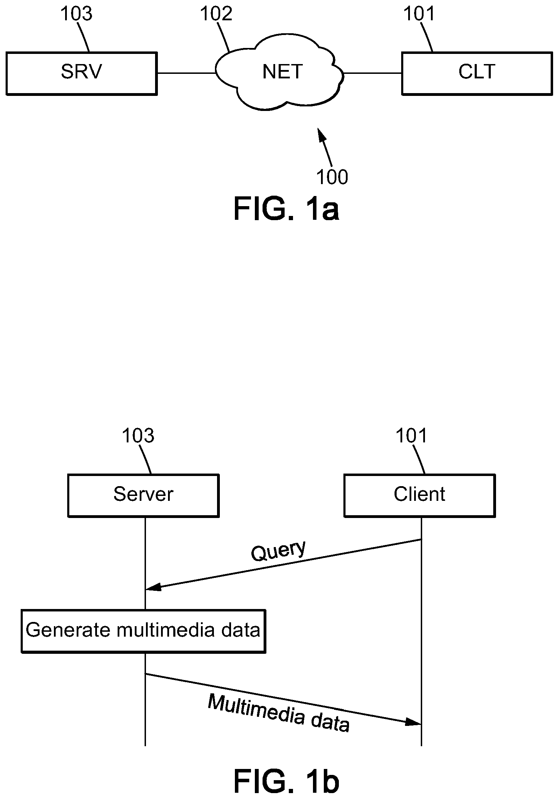

Fig. 1a illustrates an exemplary multimedia data delivery system (100) according to embodiments of the present subject disclosure.

Shown on Fig. 1a is a multimedia data delivery system (100) that comprises a server device (103) and a user device (101) which are configured for exchanging data through one or more data communication networks (102), at least one of which may be an Internet Protocol (IP) network.

In one or more embodiments, the user device (101) may be a device implementing a client function with respect to a server function implemented in the server device (103).

Depending on the embodiment, each of the user device (101) and server device (103) may be implemented in software, hardware, or as a combination of software and hardware.

In one or more embodiments, the server device (103) and the user device (101) may be configured to exchange data using the HyperText Transfer Protocol (HTTP) protocol. For example, the server device (103) may comprise a HTTP server configured for receiving HTTP requests issued by the user device (101), and for responding to such HTTP requests, and the user device (101) may comprise a HTTP client configured for generating HTTP requests and transmitting such HTTP requests to the server device (103). In such embodiments, the user device (101) and the server device (103) may each be configured to operate as a HTTP endpoint.

In one or more embodiments, the user device (101) may implement a DVB-I client function, and the server device (103) may implement one or more DVB-I server functions (e.g. including one or more of a DVB-I Service List Registry (SLR) function and a DVB-I Service List Server (SLS) function).

Fig. 1b is a schematic diagram of a request-response data communication exchange between a server and a client according to embodiments of the present subject disclosure.

As shown on Fig. 1b, the data communication between the server and the client may for example take place between the user device (101) and the server device (103) illustrated on Fig. 1a.

As shown on Fig. 1b, in one or more embodiments, the user device (101) may send to the server device (103) a request message ("Query"), for example in the form of a HTTP request. The server device (103) may process the request and, in some embodiments, send Multimedia Data to the user device (101) in response to the request, for example in the form of a HTTP response.

In one or more embodiments, the request message may comprise a query message requesting multimedia data, the query message including a parameter related to customization of multimedia data, for example in relation to a user of the user device (101).

In one or more embodiments, the Multimedia Data may be comprised in a response message, and include for example multimedia data customized for the user based on the parameter.

In one or more embodiments, a DVB-I framework may be used for implementing the present subject disclosure.

For example, in some embodiments, the user device (101) may implement a DVB-I client function, and the server device (103) may implement one or more DVB-I server functions including one or more of a DVB-I SLR function and a DVB-I SLS function, as specified in the document entitled "DVB-I Bluebook A177r4", dated September 2022, as the case may be adapted for implementing one or more embodiments of the proposed methods. In such embodiments, the request may include a DVB-I query (such as, for example, a Service List Query or a Service List Discovery Query) issued by the DVB-I client, and the response message may for example be returned, depending on the embodiment, by the DVB-I SLR and may include a list of Service List Entry Points in response to a Service List Discovery Query, or by the DVB-I SLS and may include an Aggregated Service List or Service List, as described in the document "DVB-I Bluebook A177r4", dated September 2022, as the case may be adapted for implementing one or more embodiments of the proposed methods.

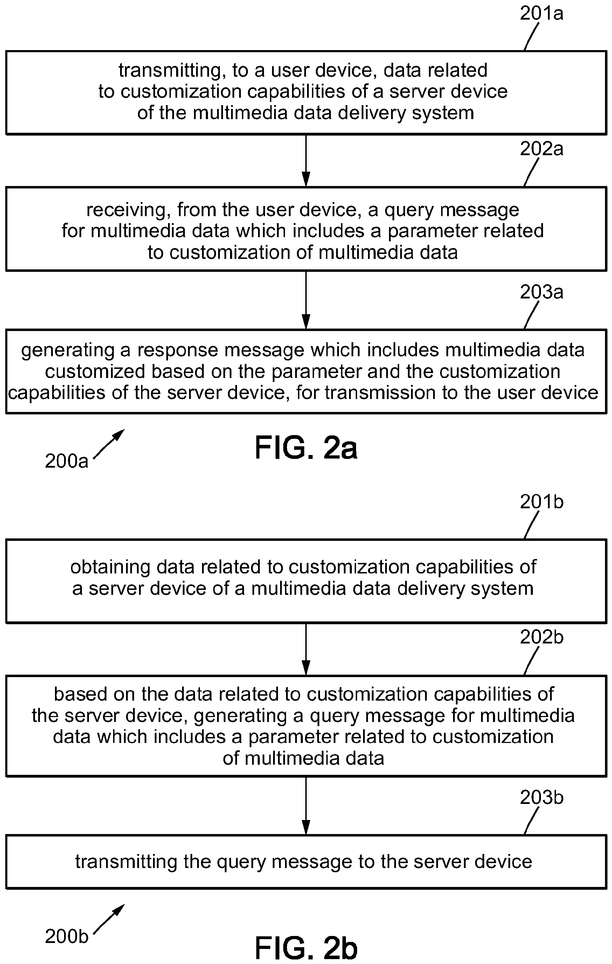

Fig. 2a is a block schematic diagram of a method (200a) for delivering multimedia data to a user device according to embodiments of the present subject disclosure.

The exemplary method illustrated by Fig. 2a may advantageously be implemented on a server device of a multimedia data delivery system, such as the exemplary server device (13) shown on Figs 1a - 1b.

One may therefore consider for implementation of embodiments of the proposed method a multimedia data delivery system such as illustrated on Fig. 1a which comprises a user device and a server device which may in some embodiments implement a DVB-I client function, and one or more of a DVB-I SLR function and a DVB-I SLS function, respectively. In particular, one or more user devices may be configured to use data communication (including protocols) as defined in the DVB-I technical specifications to communicate with an improved DVB-I server.

The proposed method may advantageously be implemented on an improved DVB-I SLR function and/or an improved DVB-I SLS function, which may be implemented in software, hardware, or as a combination of software and hardware. In one or more embodiments, the proposed improved DVB-I SLR function and/or improved DVB-I SLS function may be implemented as one or more software programs running on a server (e.g. a Linux server).

In one or more embodiments, a server (for example the server device) of the multimedia data delivery system may be configured for transmitting (201a), to a user device of the multimedia data delivery system, data related to customization capabilities of the server device.

The server (e.g. the server device) may therefore provide to the user device information related to customization capabilities of the server device, so that the user device may issue a query according to such capabilities (e.g. a query that complies with and/or conforms to such capabilities).

In some embodiments, the data related to the customization capabilities of the server device may be transmitted to the user device through signaling, such as for example signaling messages or in-band signaling.

For example, in some embodiments, the data related to the customization capabilities of the server device may be signaled to the user device through metadata transmitted to the user device. The metadata may be related to multimedia data which are available or made available for distribution to the user device. In some embodiments, the metadata may include an address, for example in the form of a Uniform Resource Locator (URL), of the data related to the customization capabilities of the server device.

In one or more embodiments, the server device of the multimedia data delivery system may further be configured for receiving (202a), from the user device, a query message for multimedia data, which the query message includes a parameter related to customization of multimedia data.

In one or more embodiments, the server device of the multimedia data delivery system may further be configured for, upon receiving the query message, generating (203a) a response message which includes multimedia data, customized (for example for the user or the user device) based on the parameter and the customization capabilities of the server device. The response message may be generated for transmission to the user device, for example as a response to the query message received from the user device.

In some embodiments, the server device may be further configured to transmitting, to the user device, the response message.

Fig. 2b is a block schematic diagram of a method (200b) of managing delivery of multimedia data to a user device according to embodiments of the present subject disclosure.

The exemplary method illustrated by Fig. 2b may advantageously be implemented on a user device of a multimedia data delivery system, such as the exemplary user device (11) shown on Figs 1a - 1b.

One may therefore consider for implementation of embodiments of the proposed method a multimedia data delivery system such as illustrated on Fig. 1a which comprises a user device and a server device which may in some embodiments implement a DVB-I client function, and one or more of a DVB-I SLR function and a DVB-I SLS function, respectively. In particular, one or more user devices may be configured to use data communication (including protocols) as defined in the DVB-I technical specifications to communicate with an improved DVB-I server.

The proposed method may advantageously be implemented on an improved DVB-I client function, which may be implemented in software, hardware, or as a combination of software and hardware. In one or more embodiments, the proposed improved DVB-I client function may be implemented as a software program running on a user device.

In one or more embodiments, the user device of the multimedia data delivery system may be configured for obtaining (201b) data related to customization capabilities of a server device of the multimedia data delivery system.

In some embodiments, the server device may provide to the user device information related to its customization capabilities, so that the user device may obtain such capabilities and issue a query that complies with and/or conforms to such capabilities.

In some embodiments, the data related to the customization capabilities of the server device may be obtained by the user device through signaling transmitted to the user device, such as for example signaling messages or in-band signaling.

For example, in some embodiments, the data related to the customization capabilities of the server device may be obtained by the user device through metadata received by the user device. The metadata may be related to multimedia data which are available or made available for distribution to the user device. In some embodiments, the metadata may include an address, for example in the form of a Uniform Resource Locator (URL), of the data related to the customization capabilities of the server device.

In one or more embodiments, the user device of the multimedia data delivery system may be further configured for generating (202b), based on the data related to the customization capabilities of the server device, a query message for multimedia data. In some embodiments, the query message may include a parameter related to customization of multimedia data, for example in relation to one or more of a user of a user device, properties in relation with the user device and user device settings. In some embodiments, the parameter may include a parameter related to customization of multimedia data.

In one or more embodiments, the user device of the multimedia data delivery system may be further configured for transmitting (203b) the query message to the server device.

In one or more embodiments, the user device of the multimedia data delivery system may be further configured for receiving, from the server device, a response message to its query message, the response message including multimedia data customized according to the parameter included in the query message.

In one or more embodiments, the user device may be configured for obtaining the data related to customization capabilities of the server device by receiving such data further to the transmitting, to the server device, of a request for customization capabilities of the server device.

The user device may therefore in some embodiments query the server device regarding data related to customization capabilities of the server device, in order to obtain such data in a response message received from the server device.

Depending on the embodiment, data related to customization capabilities of the server device may comprise one or more of (i) data related to (e.g. describing) capabilities of the server device to process requests for customized multimedia data, and (ii) data related to (e.g. describing) requests for customized multimedia data (or customized queries) that are admissible for the server device (that the server device expects to receive and/or is capable to process), such as, for example, data related to one or more of format(s) (e.g. of a request for customized data), syntax(es) (e.g. of a request for customized data, of a customization profile), and profile(s) (e.g. a customization profile), supported by the server device, and which may be used for requests for customized multimedia data (or customized queries) addressed to the server device.

In one or more embodiments, the server device may be configured for receiving, from the user device, a request for customization capabilities of the server device, and for transmitting the data related to customization capabilities to the user device in response to the received request.

In one or more embodiments, the parameter related to customization of multimedia data included in the query message may relate to one or more of: a service entry, an instance, a content guide, a playlist, an image format, an object-based media feature, a login syntax, and an identifier syntax.

Various suitable formats (e.g. markup language formats) may be used for the parameter related to customization of multimedia data. For example, depending on the embodiment, the parameter related to customization of multimedia data may include one or more elements in an eXtensible Markup Language (XML) format, a Yet Another Markup Language (YAML) format, or a javaScript Object Notation (JSON) format.

The present subject disclosure may advantageously be implemented in a DVB-I framework, as described in the following.

As provided in the DVB-I specifications, various parameters/attributes may be used in DVB-I queries, such as for example in a query to a Service List Registry. Details on these parameters can be found in Section 5.1.3.2 of the document "DVB-I Bluebook A177r4", dated September 2022.

The present subject disclosure advantageously provides the use of improved DVB-I queries (e.g. improved "Service List Discovery Query" queries, improved "Service List Query" queries, and improved "Content Guide Query" queries) in that such DVB-I queries include, in one or more embodiments, a parameter related to customization of multimedia data (which may be referred to herein as a "customization parameter") according to one or more embodiments, for example as an additional parameter (which may be referred to herein as "CustomizedQuery" data element) to parameters specified for a DVB-I query, and correspondingly the use of improved DVB-I clients configured to use the proposed improved DVB-I queries.

In one or more embodiments, the personalization parameter ("CustomizedQuery") may advantageously allow the DVB-I client to provide additional user information upon which the DVB-I server can personalize the response.

Thanks to the customization parameter, the DVB-I client may indicate in the query (e.g. a "Service List Discovery Query" or a "Service List Query") information related to customization of multimedia data.

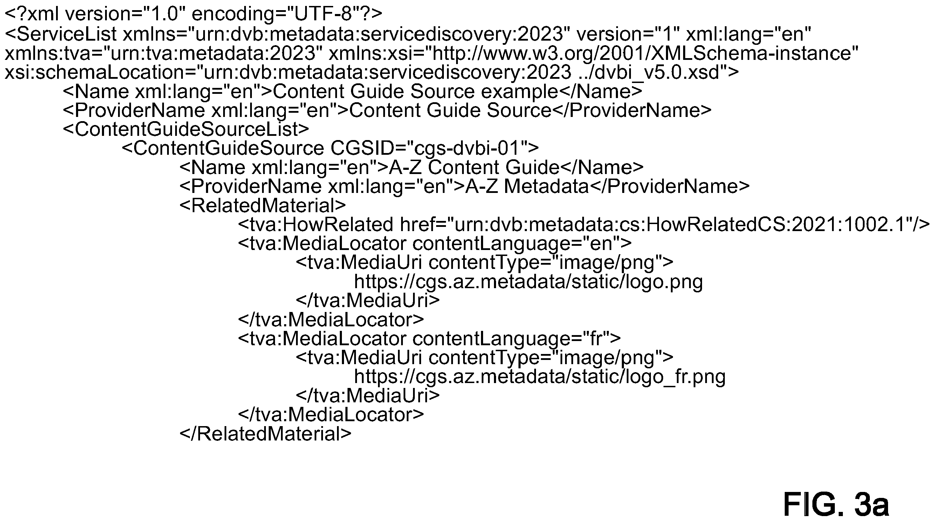

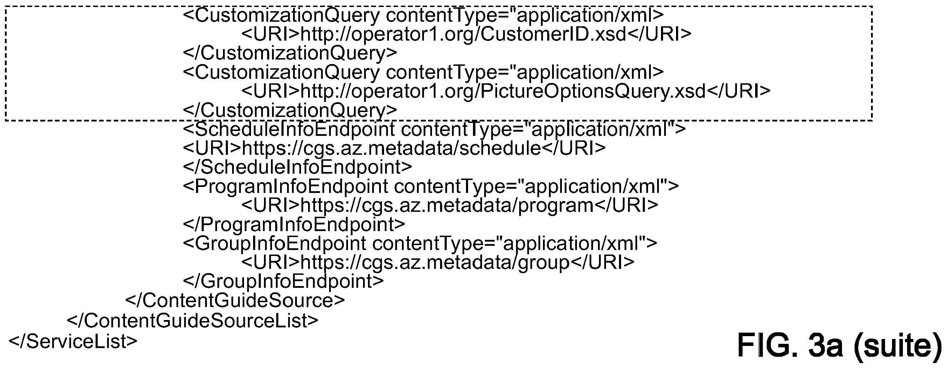

In one or more embodiments, FAST services may therefore advantageously be managed through a DVB-I framework configured for implementing embodiments of the present subject disclosure, as illustrated in Figs. 3a - 3c described below.

In some embodiments, the user device may be configured to operate as a DVB-I client configured to implement a DVB-I client function as described in the DVB-I specifications, and the server device may be configured to implement one or more DVB-I server functions, such as one or more of a DVB-I Service List Server (SLS) function and a Service List Registry (SLR) function, as described in the DVB-I specifications.

For example, in some embodiments using a DVB-I framework, the user device may comprise a DVB-I client engine configured for implementing one or more DVB-I client functions.

Likewise, in some embodiments using a DVB-I framework, the server device may comprise one or more DVB-I server engines configured for implementing one or more DVB-I server functions, such as one or more of a DVB-I Service List Server engine configured for implementing a DVB-I SLR function, a DVB-I Service List Registry engine configured for implementing a DVB-I SLS function, and a DVB-I Content Guide Server engine configured for implementing a DVB-I CGS function.

As provided in the DVB-I specifications, the DVB-I server (e.g. implementing one or more of a SLR and a SLS) may in some embodiments be an HTTP endpoint available at a URL known to the DVB-I client.

In one or more embodiments, a user device (e.g. implementing a DVB-I client) may be configured to generate a query message for multimedia data which includes a parameter related to customization of multimedia data. The parameter related to customization of multimedia data may be included in the query message to indicate presence of customization features in a parent element of the parameter, and one or more of the elements present with the parent element.

In some embodiments, the parameter related to customization of multimedia data may include a data element (e.g. a "CustomizedQuery" data element) that indicates possible values that the query can take, such as for example an "application/xml" for a XSD schema, an "application/yaml" for a Yaml OpenApi 3.0 schema, or an "application/json" for an OpenApi 3.0 schema.

In embodiments where the query message is in the XML format, the parameter related to customization of multimedia data may comprise a XML "CustomizedQuery" data element comprising a xsd root element, such as for example:

```
        <CustomizedQuery contentType=application/xml>
        <URI> http://operatorl.org/my.xsd</URI>
        </CustomizedQuery>
```

In this example, the "application/xml" may comprise data which indicates possible values that the query can take.

In embodiments where the query message is in the YAML format, the parameter related to customization of multimedia data may comprise a XML "CustomizedQuery" data element comprising a xsd root element, such as for example:

```
        <CustomizedQuery contentType=application/yaml>
        <URI> http://operatorl.org/my.yaml</URI>
        </CustomizedQuery>
```

In this example, the "application/yaml" may comprise data which indicates possible values that the query can take.

In embodiments where the query message is in the JSON format, the parameter related to customization of multimedia data may comprise a JSON "CustomizedQuery" data element comprising a xsd root element, such as for example:

```
        <CustomizedQuery contentType=application/json>
        <URI> http://operatorl.org/my.json</URI>
        </CustomizedQuery>
```

In this example, the "application/json" may comprise data which indicates possible values that the query can take.

In one or more embodiments, the "CustomizedQuery" data element may be ignored by uncognicient devices so as to ensure backward compatibility.

In some embodiments, a plurality of parameters related to customization of multimedia data may be included in the query message in order to combine different customizations of queried multimedia data. For example, a plurality of "CustomizedQuery" data elements may be used (e.g. by a DVB-I client in a DVB-I query) in order to combine several customizations of data queried in a query for multimedia data.

In one or more embodiments, a DVB-I client may be configured to use the proposed method, in particular to obtain (e.g. receive, from an improved DVB-I server) data related to customization capabilities of the DVB-I server to which a query for multimedia data is to be sent. The DVB-I client may be further configured to use received data related to customization capabilities of the DVB-I server for generating a query message for multimedia data to be presented to the DVB-I server.

In some embodiments, the DVB-I client may be configured for including in, or providing along with, the query message to be presented to the DVB-I server data related to one or more of the format, the syntax, and a customization profile used in the query for requesting customization features. For example, the DVB-I client may have obtained data related to customization capabilities of the server without directly requesting such data from the server, e.g. by consulting a data repository at a given URL address. For example, in some embodiments, the customization parameter, which may comprise a "CustomizedQuery" data element, may comprise data describing the syntax used for the customization parameter (for example the syntax used in the "CustomizedQuery" data element), which may for example be defined by the "<URI>http://operator1.org/my.xsd</URI>" data element in the above example.

In one or more embodiments, embodiments of the proposed methods according to the present subject disclosure may advantageously be used for various customization types.

In some embodiments, a (customization capabilities) file in any suitable data communication protocol format (for example a XML Schema Definition (XSD) file document) may be used by a server device (e.g. an improved DVB-I server) to provide information on capabilities of the server device for serving queries (requests) for multimedia data customized in relation to one or more customization types.

In one or more embodiments, a user device (e.g. an improved DVB-I client) may want to send to a server device (e.g. an improved DVB-I server) a query message for multimedia data which includes a parameter related to customization of multimedia data in relation to one or more customization types. In some embodiments, one or more customization parameters may be used to qualify any query so that multimedia data provided in response to the query matches the requested customization parameters.

In one or more embodiments, the server device (e.g. the improved DVB-I server) may provide information related to its customization capabilities by defining the arguments that are supported for a query for multimedia data customized in relation to one or more customization types. The definition of arguments that are supported by the server device may comprise one or more of: a definition of the type of arguments that are supported, definition of supported values for one or more types of arguments, and definition of a syntax of the query.

In one or more embodiments, the set of defined arguments that are supported by the server device (which may comprise one or more types of arguments, values for one or more types of arguments, and syntax of the query), and/or the set of customization parameters defined for customization usable in a request (a query in the DVB-I context) may constitute an example of a customization profile related to one or more types of customization defined for requesting customized multimedia data.

In some embodiments, the server device (e.g. improved DVB-I server) may be configured for rejecting, ignoring, or discarding any customized query that is not compliant with information provided in the customization capabilities file, or else, depending on the embodiment, return an error message to the user device (e.g. improved DVB-I client) that originated the customized query.

In some embodiments, assuming that the customized query is for supported customization parameters, the server device (e.g. the improved DVB-I server) may be configured for issuing a 200 (OK) HTTP response containing the requested customized multimedia data or resource to access such customized multimedia data. In the case where an unsupported customization parameter is provided, the server device (e.g. the improved DVB-I server) may respond with an HTTP 400 (Bad Request) response. Alternatively, or in addition, the server device (e.g. the improved DVB-I server) may respond with data providing information for accessing a file which defines the supported syntax for customized queries.

Advantageously, the URL format specified in Section 6.5.3.1 of the DVB BlueBook A177r3 specification for a schedule request filtered with a service identifier and/or a now/next parameter may be used in one or more embodiments to define an identifier filter for customizing the request based on one or more customization parameters corresponding to one or more types of customization.

For example, a schedule request (query) to a content guide server endpoint (of URL ScheduleInfoEndpoint) may in some embodiments be customized based on one or more customization parameters, according to the following exemplary URL formats:

```
        https://<ScheduleInfoEndpoint>&CustomizationParameter=<customi
 zationParameter>
        https://<ScheduleInfoEndpoint>?sid=<service_id>&CustomizationP
 arameter=<customizationParameter>
        https://<ScheduleInfoEndpoint>?sid=<service id>&now next=<wind
 ow_type>&CustomizationParameter=<customizationParameter>
```

In one or more embodiments, the schedule request (query) to a content guide server endpoint customized based on one or more customization parameters through a customization filter may further be filtered for one or more of a service identifier ("sid=<service_id>"), and a set of events provided in addition to the current event ("now_next=<window_type>").

In some embodiments, an improved DVB-I client may advantageously use the exemplary customization filter provided in the present subject disclosure to request from the content guide server endpoint multimedia data customized based on the customization parameters indicated in the customization filter(s). In response, the DVB-I client may receive a XML document (Schedule Response) comprising resources for multimedia data that is customized based on the customization parameters indicated in the customization filter, possibly in a format similar to that described in Section 6.5.4 of the DVB-I Bluebook A177r4 document.

In the following exemplary embodiments of the proposed methods according to the present subject disclosure are described for the following types of customization: customization based on an identifier (e.g. a user identifier, such as a login identifier), customization based on an image format, customization based on a video format, customization based on content language, customization based on metadata language, and customization based on accessibility feature(s).

Section 6.4 of the document "DVB-I Bluebook A177r4," dated September 2022 (« Endpoint Queries ») defines various requests (in the form of endpoint queries) that a DVB-I client may make in order to populate its UI.

Section 6.4 further provides exemplary content guide metadata in the form of a "contentGuideSourceList" information element that may be used in a XML instance document returned on interface B2 in response to a service list query.

In one or more embodiments, an improved DVB-I server may provide data related to its customization capabilities through signaling of content guide metadata provided to a DVB-I client. Accordingly, the DVB-I server may provide an improved "contentGuideSourceList" information element that may be used in a XML instance document returned on interface B2 in response to a service list query.

In one or more embodiments, the improved "contentGuideSourceList" information element (and corresponding Service List field) may be modified to include one or more customization capabilities parameters (for example called "CustomizationQuery" information elements) according to embodiments of the present subject disclosure.

For example, in some embodiments, the improved "ContentGuideSourceList" information element (and corresponding Service List field) may include the following customization capabilities parameter for indicating an expected format for customizing a query presented to the server for a customer with a given identifier (e.g. a given customer ID value):

```
        <CustomizationQuery contentType="application/xml>
              <URI>http://operatorl.org/CustomerID.xsd</URI>
        </CustomizationQuery>
```

In this example, the xsd file "CustomerID.xsd" is provided by the server to signal to clients a format supported by the server for customizing queries to the server with an identifier (e.g. a user identifier).

As another example, in some embodiments, the improved "ContentGuideSourceList" information element (and corresponding Service List field) may include the following customization capabilities parameter for indicating values of a format of a picture that may be used by an improved DVB-I client for querying a picture with a customized format:

```
        <CustomizationQuery contentType="application/xml>
              <URI>http://operatorl.org/PictureOptionsQuery.xsd</URI>
        </CustomizationQuery>
```

Fig. 3a shows an exemplary customized content guide information element which includes customization capabilities parameters according to one or more embodiments.

The customized content guide illustrated on Fig. 3a comprises the two above-described customization capabilities parameters, in the form of xsd documents: <URI>http://operatori.org/CustomerlD.xsd</URI>, and <URI>http://operatorl.org/PictureOptionsQuery.xsd</URI>.

The "customerID. xsd" document provides information on the format of the CustomerlD query.

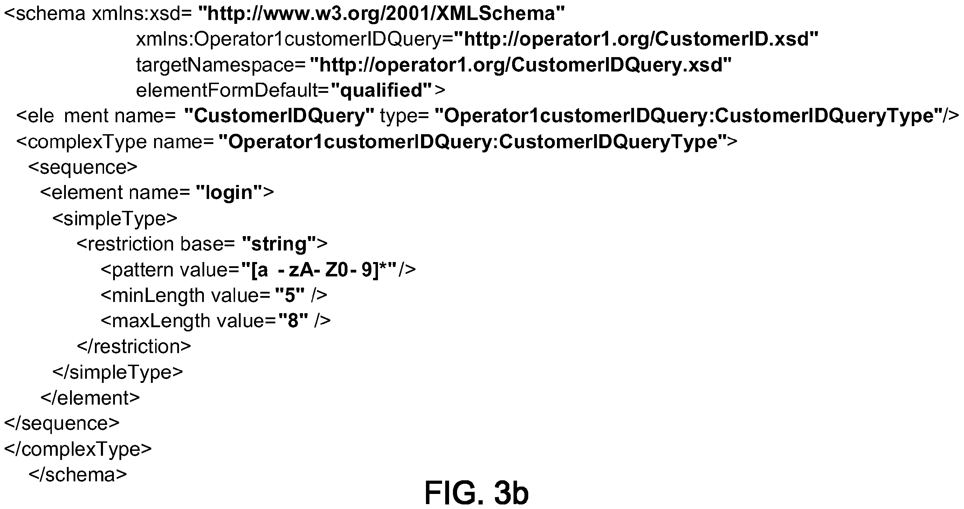

An example of content of a "CustomerlD.xsd" document is shown on Fig. 3b.

As shown on Fig. 3b, in one or more embodiments, the DVB-I server may inform clients through such a document that it may be configured with capabilities to serve queries customized for a specific identifier, referred to in the example of Fig. 3b as "login". The exemplary "CustomerID.xsd" document of Fig. 3b shows a supported syntax for using the "login" customization parameter. As shown on Fig. 3b, the "login" customization parameter may be a "string" of N characters (N being for example a non-zero natural integer), each in the set [a-zA-Z0-9]. The length N of the login string may not be smaller than 5 or greater than 8:

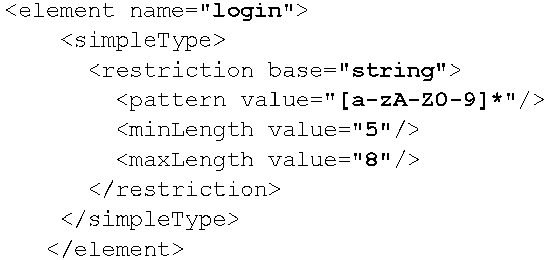

In other words, in some embodiments, the DVB-I server may provide information of support of queries customized based on an identifier ("login") which have a format defined in a document such as the exemplary "CustomerlD.xsd" document of Fig. 3b.

As shown on Fig. 3b, the DVB-I server may provide information related to its customization capabilities with respect to customization of queries based on an identifier by defining the arguments that are supported for a query based on an identifier. The definition of arguments that are supported by the DVB-I server may comprise one or more of: a definition of the type of arguments that are supported, definition of supported values for one or more types of arguments, and definition of a syntax of the query. In some embodiments, the DVB-I server may provide information and/or the DVB-I client may obtain information that any query customized with an identifier presented to the DVB-I server should therefore indicate a "login" string which uses certain supported characters and of a length with a value chosen among the possible values for the length of the login.

In some embodiments, the DVB-I server may be configured for rejecting, ignoring, or discarding any query customized for an identifier ("login") that is not compliant with information provided in the CustomerID.xsd document, such as for example a query customized for a certain customer ID (login) wherein the login is a character string of more than the maximum supported number of characters in a login string, or else, depending on the embodiment, return an error message to the DVB-I client that originated the query customized with the login.

In some embodiments, assuming that the customized query is for a valid login, the DVB-I server may be configured for issuing a 200 (OK) HTTP response containing the requested data customized for the login or resource to access such customized data. In the case where an unsupported login is provided as customization parameter, the DVB-I server may respond with an HTTP 400 (Bad Request) response. Alternatively, or in addition, the DVB-I server may respond with data providing information for accessing a document which defines the supported syntax for customizing queries based on an identifier (e.g. the customeriD. xsd document of Fig. 3b).

The set of parameters defined for an identifier (login) usable in a request (a query in the DVB-I context) customized based on an identifier may constitute an example of a customization profile defined for customizing a query based on an identifier.

Advantageously, the URL format specified in Section 6.5.3.1 of the DVB BlueBook A177r3 specification for a schedule request filtered with a service identifier and/or a now/next parameter may be used in one or more embodiments to define an identifier filter for customizing the request based on an identifier (login) as a customization parameter.

For example, a schedule request (query) to a content guide server endpoint (of URL ScheduleInfoEndpoint) may in some embodiments be customized based on an identifier (login) through a customization filter (e.g. "login=<login_string>") according to the following exemplary URL format:

```
        https://<ScheduleInfoEndpoint>?sid=<service_id>&now_next=<wind
 ow_type>&image_variant=<variant>&login=<char_string>
```

In one or more embodiments, the schedule request (query) to a content guide server endpoint customized based on an identifier ("login") through a customization filter may further be filtered for one or more of a service identifier ("sid=<service_id>"), a set of events provided in addition to the current event ("now_next=<window_type>"), and/or an image variant ("image variant=<variant>").

For example, a query to a content guide server endpoint customized for the identifier "Abcde5" may in some embodiments use the following URL format:

```
        https://<ScheduleInfoEndpoint>?sid=12345&now_next=true&login=A
        bcde5
```

In some embodiments, an improved DVB-I client may advantageously use the customization filter provided in the present subject disclosure to request from the content guide server endpoint content guide data that is customized based on the identifier (login) indicated in the customization filter. In response, the DVB-I client may receive a XML document comprising resources for content guide data that is customized based on the identifier (login) indicated in the customization filter, possibly in a format similar to that described in Section 6.5.4 of the DVB-I Bluebook A177r4 document.

The "PictureOptionsQuery.xsd" document provides information on capabilities of the DVB-I server for serving queries (requests) for customized format picture.

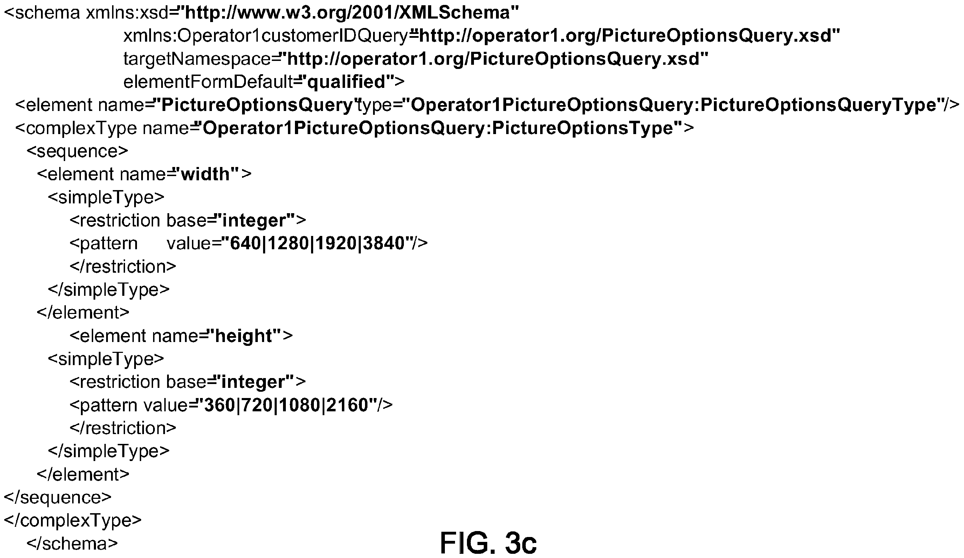

An example of content of a "PictureOptionsQuery.xsd" document is shown on Fig. 3c.

As shown on Fig. 3c, in one or more embodiments, the arguments of a query for customized format picture may include the width and the height of the picture. Further, the DVB-I server may only be configured with capabilities to serve queries for a customized format picture with a requested length chosen in a set of N possible picture lengths (e.g. expressed in pixels) {*Lᵢ*}_{*i*=1,...,*N*} (for example 640, 1280, 1920 or 3840 pixels), and a requested width chosen in a set of M possible picture widths (e.g. expressed in pixels) {*Wⱼ*}_{*j*=1,...,*M*} (for example 340, 720, 1080, or 2160 pixels). In other words, in some embodiments, the DVB-I server may provide information of support of customized format picture queries where the customized format of the picture is defined by a width and a length of the picture, with specific values to be chosen from for each of the width and the height of the requested picture.

As shown on Fig. 3c, the DVB-I server may provide information related to its customization capabilities by defining the arguments that are supported for a query for a customized format picture. The definition of arguments that are supported by the DVB-I server may comprise one or more of: a definition of the type of arguments that are supported, definition of supported values for one or more types of arguments, and definition of a syntax of the query. In some embodiments, the DVB-I server may provide information and/or the DVB-I client may obtain information that any customized format picture query presented to the DVB-I server should therefore indicate a width and a length of the customized picture, with a value chosen among the possible values for each of the width and the height of the picture.

For example, in some embodiments, the DVB-I server may be configured for rejecting, ignoring, or discarding any customized picture query that is not compliant with information provided in the PictureOptionsQuery.xsd document, such as for example a customized picture query which requires a specific width and no specific height of a picture, or else, depending on the embodiment, return an error message to the DVB-I client that originated the customized picture query.

In some embodiments, assuming that the customized picture query is for a valid customized picture format, the DVB-I server may be configured for issuing a 200 (OK) HTTP response containing the requested customized picture data or resource to access such customized picture data. In the case where an unsupported customized picture format is provided as customization parameter, the DVB-I server may respond with an HTTP 400 (Bad Request) response. Alternatively, or in addition, the DVB-I server may respond with data providing information for accessing a document which defines the supported syntax for customized picture queries (e.g. the PictureOptionsQuery.xsd document of Fig. 3c).

The set of parameters defined for a customized picture format usable in a request (a query in the DVB-I context) may constitute an example of a customization profile defined for requesting a picture.

Advantageously, the URL format specified in Section 6.5.3.1 of the DVB BlueBook A177r3 specification for a schedule request filtered with a service identifier and/or a now/next parameter may be used in one or more embodiments to define an identifier filter for customizing the request based on a picture format as a customization parameter.

For example, a schedule request (query) to a content guide server endpoint (of URL ScheduleInfoEndpoint) may in some embodiments be customized based on one or more customized picture format parameters, such as for example one or more of a specific length and a specific width, through a customization filter (e.g. "width=<imageWidth>", and "height=<imageHeight>") according to the following exemplary URL format:

```
        https://<ScheduleInfoEndpoint>?sid=<service id>&now next=<wind
 ow_type>&login=<charstring>&width=<imageWidth>&height=<imageHeight>
```

In one or more embodiments, the schedule request (query) to a content guide server endpoint customized based on one or more customized picture format parameters through a customization filter may further be filtered for one or more of a service identifier ("sid=<service_id>"), a set of events provided in addition to the current event ("now_next=<window_type>").

For example, a query to a content guide server endpoint customized for a picture height of "720" and a picture width of "1280" may in some embodiments use the following URL format:

```
        https://<ScheduleInfoEndpoint>?sid=12345&now_next=true&login=A
        bcde5&width=1280&height=720
```

In some embodiments, an improved DVB-I client may advantageously use the customization filter provided in the present subject disclosure to request from the content guide server endpoint picture data for a picture of a picture format customized based on the customization parameters indicated in the customization filter. In response, the DVB-I client may receive a XML document (Schedule Response) comprising resources for picture data that is customized based on the customization parameters (e.g. width in number of pixels, height in number of pixels) indicated in the customization filter, possibly in a format similar to that described in Section 6.5.4 of the DVB-I Bluebook A177r4 document.

For example, as shown in the example schedule response provided in Section 6.5.4.3.1 of the DVB-I Bluebook A177r4 document for an exemplary timestamp filtered schedule response, the DVB-I client may receive a response in the form of a XML document that includes the following resources to an image:

```
        <MediaLocator>
              <MediaUri contentType="image/png">
              https://img-ctv.mdata.co.uk/channel7/Bargain_hunt.png
              </MediaUri>
        </MediaLocator>
```

The "Bargain_hunt.png" for which access resources are provided in the exemplary response may be in a customized format (e.g. height and/or width) that has been requested through one or more customization filters included in the request using the following format:

```
        https://img-
 ctv.mdata.co.uk/channel7/Bargain_hunt.png?width=1280&height=720
```

As another example, a request for a picture ("QueryForPicture") of customized format may in some embodiments use a URL format with one or more customized request filters related to a customized picture format, such as for example:

```
        https://<QueryForPicture>?picture_width=<picturewidth>&picture
        _height=<pictureHeight>
```

For example, a request for a picture of customized format 1280 x 720 pixels (height of 1280 pixels and width of 720 pixels) may in some embodiments use the following URL format:

```
        https://<QueryForPicture>?width=1280&height=720
```

As described in Section 5.2.8 of the DVB-I Bluebook A177r4 document, Service Lists, services, applications, and programmes may have an associated image, and image processing related query parameters may be included in a request for an image linked from a service list or content guide sourced metadata. In particular, a DVB-I client as specified in the DVB-I Bluebook A177r4 document (dated September 2022)may request that image scaling be performed by the DVB-I server using an image width requested through a query parameter ("w"=<imageWidth> and/ or ("h"=<imageHeight>) of an <image_URL> request. However, since the DVB-I client as specified in the DVB-I Bluebook A177r4 document (dated September 2022) is not cognizant on the supported image format due to the lack of signaling or lack of available capability query, the Content Guide Server specified in the DVB-I Bluebook A177r4 document shall respond with an HTTP 400 response indicating a Bad Request in the case that an unsupported width parameter is provided. These unsuccessful requests may be repeated until the client possibly guesses a width parameter supported by the server, which however generates unnecessary traffic, an increases the latency for responding to the client.

In one or more embodiments, embodiments of the proposed methods according to the present subject disclosure may be used for a type of customization related to video format.

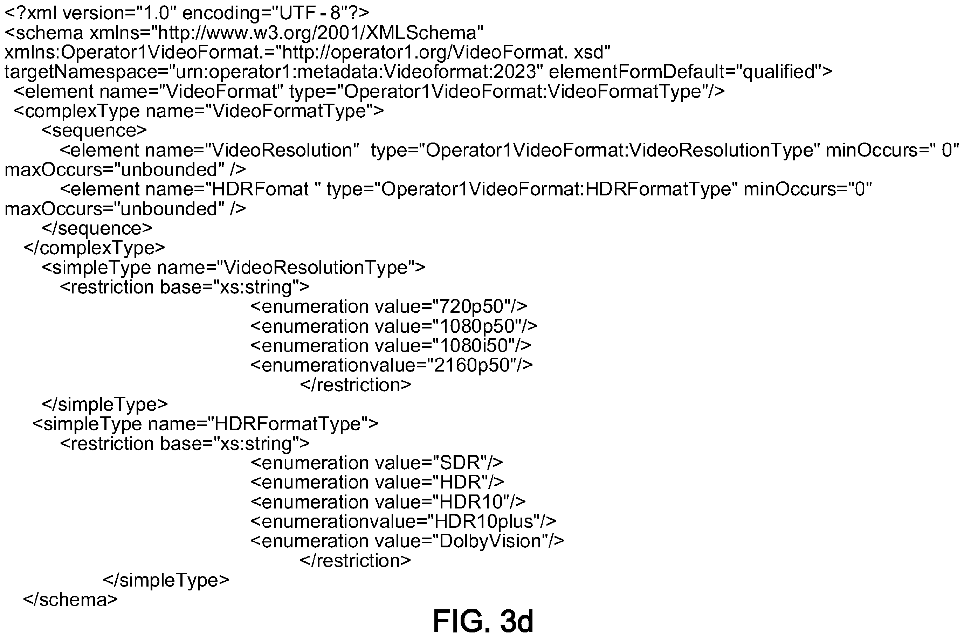

As shown on Fig. 3d, a "VideoFormat.xsd" document may in some embodiments be used by a server device (e.g. an improved DVB-I server) to provide information on capabilities of the server device for serving queries (requests) for customized video format.

In one or more embodiments, a user device (e.g. an improved DVB-I client) may want to send to a server device (e.g. an improved DVB-I server) a query message for multimedia data which includes a parameter related to customization of multimedia data in relation to video format of the multimedia data. In some embodiments, one or more video format customization parameters may be used to qualify any query so that metadata to multimedia content or service provided in response to the query matches the requested video format customization parameters.

An example of content of a "VideoFormat.xsd" document is shown on Fig. 3d.

As shown on Fig. 3d, in one or more embodiments, the arguments of a query for customized video format may include one or more of a video resolution ("videoResolution") and a HDR format ("HdrFormat"). In some embodiments, a defined syntax for the customized query may provide that a single video resolution element chosen in a set of N_{VR} possible video resolutions (for example 2160p50 (3840 x 2160 pixels, progressive, 50Hz), 720p50 (1280 x 720 pixels, progressive, 50Hz) or 1080i50 (1920 x 1080 pixels, interlaced, 50Hz)) may be included in the request, and none or one or more HDR (High Dynamic Range) format elements (e.g. values respectively corresponding to formats) chosen in a set of N_{HF} HDR formats (for example SDR (Standard Dynamic Range), HDR, HDR10, HDR10plus, and DolbyVision) may be included in the request. Accordingly, in some embodiments, a server device (e.g. an improved DVB-I server) may be configured with capabilities to serve queries for a customized video format with a single requested video resolution chosen in a set of N_{VR} possible video resolutions (for example 2160p50, 720p50 or 1080i50), and possibly one or more HDR formats chosen in a set of N_{HF} HDR formats (for example SDR, HDR, HDR10, HDR10plus, and DolbyVision). In other words, in some embodiments, the server device (e.g. the improved DVB-I) server may provide information of support of customized video format queries where the customized format of the video is defined by a single video resolution and possibly one or more HDR formats of the requested multimedia data.

As shown on Fig. 3d, the server device (e.g. the improved DVB-I server) may provide information related to its customization capabilities by defining the arguments that are supported for a query for a customized video format. The definition of arguments that are supported by the server device may comprise one or more of: a definition of the type of arguments that are supported, definition of supported values for one or more types of arguments, and definition of a syntax of the query. In some embodiments, the server device (e.g. the improved DVB-I server) may provide information and/or the user device (e.g. the improved DVB-I client) may obtain information that any customized video format query presented to the server device should therefore indicate a single video resolution value among predefined values, and possibly one or more HDR format values among predefined values.

For example, in some embodiments, the server device (e.g. improved DVB-I server) may be configured for rejecting, ignoring, or discarding any customized video format query that is not compliant with information provided in the VideoFormat.xsd document, such as for example a customized video format query which requires no specific video resolution or an unsupported video resolution value, or else, depending on the embodiment, return an error message to the user device (e.g. improved DVB-I client) that originated the customized video format query.

In some embodiments, assuming that the customized video format query is for supported customized video format(s), the server device (e.g. the improved DVB-I server) may be configured for issuing a 200 (OK) HTTP response containing the requested customized multimedia data or resource to access such customized multimedia data. In the case where an unsupported customized video format is provided as customization parameter, the server device (e.g. the improved DVB-I server) may respond with an HTTP 400 (Bad Request) response. Alternatively, or in addition, the server device (e.g. the improved DVB-I server) may respond with data providing information for accessing a document which defines the supported syntax for customized video format queries (e.g. the VideoFormat.xsd document of Fig. 3d).

The set of parameters defined for a customized video format usable in a request (a query in the DVB-I context) may constitute an example of a customization profile related to video format defined for requesting customized multimedia data.

Advantageously, the URL format specified in Section 6.5.3.1 of the DVB BlueBook A177r3 specification for a schedule request filtered with a service identifier and/or a now/next parameter may be used in one or more embodiments to define an identifier filter for customizing the request based on a video format as customization parameter.

For example, a schedule request (query) to a content guide server endpoint (of URL ScheduleInfoEndpoint) may in some embodiments be customized based on one or more customized video format parameters, such as for example a single video resolution and possibily one or more HDR formats, through a customization filter (e.g. "VideoResolution=<videoResolution>", and "HdrFormat=<hdrFormat>") according to the following exemplary URL formats:

```
        https://<ScheduleInfoEndpoint>?sid=<service_id>&now_next=<wind
 ow_type>&VideoResolution=<videoResolution>
```

```
        https://<ScheduleInfoEndpoint>?sid=<service id>&now next=<wind
 ow type>&VideoResolution=<videoResolution>&HdrFormat=<hdrFormat>
```

In one or more embodiments, the schedule request (query) to a content guide server endpoint customized based on a video format through a customization filter may further be filtered for one or more of a service identifier ("sid=<service_id>"), a set of events provided in addition to the current event ("now_next=<window_type>").

For example, a query to a content guide server endpoint customized for a service identifier "12345" and a video resolution "2160p50" may in some embodiments use the following URL format:

```
        https://<ScheduleInfoEndpoint>?sid=12345&VideoResolution=2160p
 50
```

As another example, a query to a content guide server endpoint customized for a service identifier "12345", a video resolution "2160p50" and a HDR format "HDR10PIus" may in some embodiments use the following URL format:

```
        https://<ScheduleInfoEndpoint>?sid=12345&VideoResolution=2160p
 50&hdrFormat=HDR10Plus
```

As yet another example, a query to a content guide server endpoint customized for a service identifier "12345", a video resolution "2160p50" and a HDR format "HDR10PIus" or "DolbyVision" may in some embodiments use the following URL format:

```
        https://<ScheduleInfoEndpoint>?sid=12345&VideoResolution=2160p
 50&hdrFormat[]=HDR10Plus&hdrFormat[]=DolbyVision
```

In some embodiments, an improved DVB-I client may advantageously use the exemplary customization filter provided in the present subject disclosure to request from the content guide server endpoint multimedia data for one or more video formats customized based on the customization parameters indicated in the customization filter(s). In response, the DVB-I client may receive a XML document (Schedule Response) comprising resources for multimedia data that is customized based on the customization parameters indicated in the customization filter, possibly in a format similar to that described in Section 6.5.4 of the DVB-I Bluebook A177r4 document.

In one or more embodiments, embodiments of the proposed methods according to the present subject disclosure may be used for a type of customization related to multimedia content language.

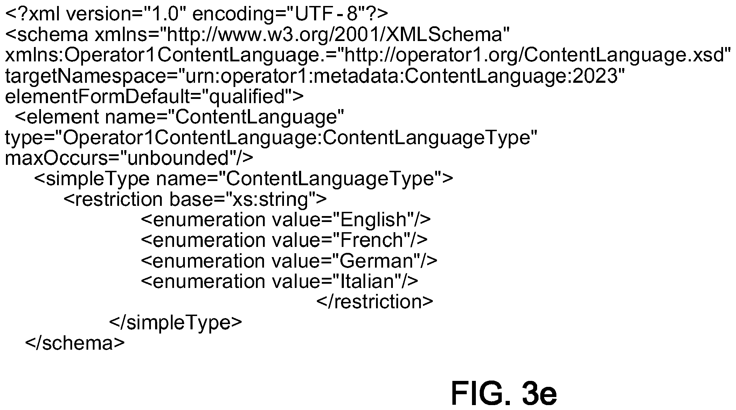

As shown on Fig. 3e, a "ContentLanguage.xsd" document may in some embodiments be used by a server device (e.g. an improved DVB-I server) to provide information on capabilities of the server device for serving queries (requests) for customized content language.

In one or more embodiments, a user device (e.g. an improved DVB-I client) may want to send to a server device (e.g. an improved DVB-I server) a query message for multimedia data which includes a parameter related to customization of multimedia data in relation to content language of the multimedia data. In some embodiments, one or more content language customization parameters may be used to qualify any query so that metadata to multimedia content or service provided in response to the query matches the requested content language customization parameters.

An example of content of a "ContentLanguage.xsd" document is shown on Fig. 3e.

As shown on Fig. 3e, in one or more embodiments, the arguments of a query for customized content language may include one or more content language elements. In some embodiments, a defined syntax for the customized query may provide that one or more content language elements (e.g. values respectively corresponding to languages) chosen in a set of N_{CL} possible content languages (for example "French", "English", "German", "Italian") may be included in the request. Accordingly, in some embodiments, a server device (e.g. an improved DVB-I server) may be configured with capabilities to serve queries for a customized content language with one or more content language elements (e.g. values respectively corresponding to languages) chosen in a set of N_{CL} possible content languages (for example "French", "English", "German", "Italian"). In other words, in some embodiments, the server device (e.g. the improved DVB-I) server may provide information of support of customized content language queries where the customized language of the content is defined by one or more content languages of the requested multimedia data.

As shown on Fig. 3e, the server device (e.g. the improved DVB-I server) may provide information related to its customization capabilities by defining the arguments that are supported for a query for a customized content language. The definition of arguments that are supported by the server device may comprise one or more of: a definition of the type of arguments that are supported, definition of supported values for one or more types of arguments, and definition of a syntax of the query. In some embodiments, the server device (e.g. the improved DVB-I server) may provide information and/or the user device (e.g. the improved DVB-I client) may obtain information that any customized content language query presented to the server device should therefore indicate one or more content language elements in string format among predefined content language elements.

For example, in some embodiments, the server device (e.g. improved DVB-I server) may be configured for rejecting, ignoring, or discarding any customized content language query that is not compliant with information provided in the ContentLanguage.xsd document, such as for example a customized content language query which requires an unsupported content language element, or else, depending on the embodiment, return an error message to the user device (e.g. improved DVB-I client) that originated the customized content language query.

In some embodiments, assuming that the customized content language query is for supported customized content language(s), the server device (e.g. the improved DVB-I server) may be configured for issuing a 200 (OK) HTTP response containing the requested customized multimedia data or resource to access such customized multimedia data. In the case where an unsupported customized content language is provided as customization parameter, the server device (e.g. the improved DVB-I server) may respond with an HTTP 400 (Bad Request) response. Alternatively, or in addition, the server device (e.g. the improved DVB-I server) may respond with data providing information for accessing a document which defines the supported syntax for customized content language queries (e.g. the ContentLanguage.xsd document of Fig. 3e).

The set of parameters defined for a customized content language usable in a request (a query in the DVB-I context) may constitute an example of a customization profile related to multimedia content language defined for requesting customized multimedia data.

Advantageously, the URL format specified in Section 6.5.3.1 of the DVB BlueBook A177r3 specification for a schedule request filtered with a service identifier and/or a now/next parameter may be used in one or more embodiments to define an identifier filter for customizing the request based on a content language as customization parameter.

For example, a schedule request (query) to a content guide server endpoint (of URL ScheduleInfoEndpoint) may in some embodiments be customized based on one or more customized content language parameters, such as for example one or more content language elements, through a customization filter (e.g. "ContentLanguage=<contentLanguage>") according to the following exemplary URL format:

```
        https://<ScheduleInfoEndpoint>?sid=<service_id>&now_next=<wind
 ow_type>&ContentLanguage=<contentLanguage>
```

In one or more embodiments, the schedule request (query) to a content guide server endpoint customized based on multimedia content language through a customization filter may further be filtered for one or more of a service identifier ("sid=<service_id>"), a set of events provided in addition to the current event ("now_next=<window_type>").

For example, a query to a content guide server endpoint customized for a service identifier "12345" and multimedia content in the "French" language may in some embodiments use the following URL formats:

```
        https://<ScheduleInfoEndpoint>?sid=12345&ContentLanguage=Frenc
 h
```

As another example, a query to a content guide server endpoint customized for a service identifier "12345" and multimedia content in the "French", "German" or "English" languages may in some embodiments use the following URL formats:

```
        https://<ScheduleInfoEndpoint>?sid=12345&ContentLanguage[]=Fre
 nch&ContentLanguage[]=English&ContentLanguage[]=German
```

In some embodiments, an improved DVB-I client may advantageously use the exemplary customization filter provided in the present subject disclosure to request from the content guide server endpoint multimedia data with one or more multimedia content languages customized based on the customization parameters indicated in the customization filter(s). In response, the DVB-I client may receive a XML document (Schedule Response) comprising resources for multimedia data that is customized based on the customization parameters indicated in the customization filter, possibly in a format similar to that described in Section 6.5.4 of the DVB-I Bluebook A177r4 document.

In one or more embodiments, embodiments of the proposed methods according to the present subject disclosure may be used for a type of customization related to metadata language.

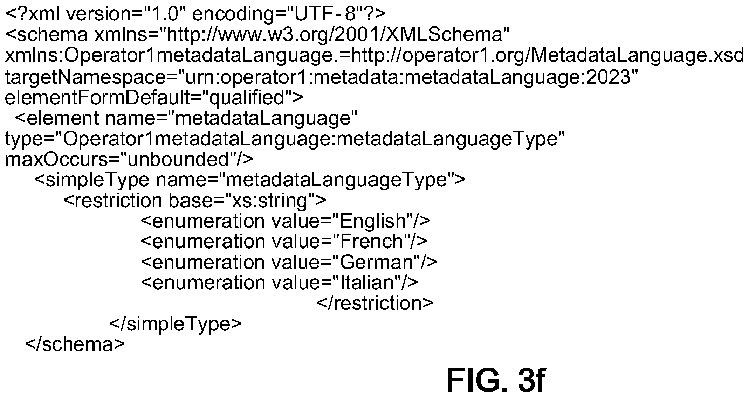

As shown on Fig. 3f, a "MetadataLanguage.xsd" document may in some embodiments be used by a server device (e.g. an improved DVB-I server) to provide information on capabilities of the server device for serving queries (requests) for customized metadata language.

In one or more embodiments, a user device (e.g. an improved DVB-I client) may want to send to a server device (e.g. an improved DVB-I server) a query message for multimedia data which includes a parameter related to customization of multimedia data in relation to metadata language of the multimedia data. In some embodiments, one or more metadata language customization parameters may be used to qualify any query so that provided in response to the query matches the requested metadata language customization parameters.

An example of content of a "MetadataLanguage.xsd" document is shown on Fig. 3f.

As shown on Fig. 3f, in one or more embodiments, the arguments of a query for customized metadata language may include one or more metadata language elements. In some embodiments, a defined syntax for the customized query may provide that one or more metadata language elements (e.g. values respectively corresponding to languages) chosen in a set of N_{ML} possible metadata languages (for example "French", "English", "German", "Italian") may be included in the request. Accordingly, in some embodiments, a server device (e.g. an improved DVB-I server) may be configured with capabilities to serve queries for a customized metadata language with one or more metadata language elements (e.g. values respectively corresponding to languages) chosen in a set of N_{CL} possible metadata languages (for example "French", "English", "German", "Italian"). In other words, in some embodiments, the server device (e.g. the improved DVB-I) server may provide information of support of customized metadata language queries where the customized language of the content is defined by one or more metadata languages of the requested multimedia data.

As shown on Fig. 3f, the server device (e.g. the improved DVB-I server) may provide information related to its customization capabilities by defining the arguments that are supported for a query for a customized metadata language. The definition of arguments that are supported by the server device may comprise one or more of: a definition of the type of arguments that are supported, definition of supported values for one or more types of arguments, and definition of a syntax of the query. In some embodiments, the server device (e.g. the improved DVB-I server) may provide information and/or the user device (e.g. the improved DVB-I client) may obtain information that any customized metadata language query presented to the server device should therefore indicate one or more metadata language elements in string format among predefined metadata language elements.

For example, in some embodiments, the server device (e.g. improved DVB-I server) may be configured for rejecting, ignoring, or discarding any customized metadata language query that is not compliant with information provided in the MetadataLanguage.xsd document, such as for example a customized metadata language query which requires an unsupported metadata language element, or else, depending on the embodiment, return an error message to the user device (e.g. improved DVB-I client) that originated the customized metadata language query.

In some embodiments, assuming that the customized metadata language query is for supported customized metadata language(s), the server device (e.g. the improved DVB-I server) may be configured for issuing a 200 (OK) HTTP response containing the requested customized multimedia data or resource to access such customized multimedia data. In the case where an unsupported customized metadata language is provided as customization parameter, the server device (e.g. the improved DVB-I server) may respond with an HTTP 400 (Bad Request) response. Alternatively, or in addition, the server device (e.g. the improved DVB-I server) may respond with data providing information for accessing a document which defines the supported syntax for customized metadata language queries (e.g. the MetadataLanguage.xsd document of Fig. 3f).

The set of parameters defined for a customized metadata language usable in a request (a query in the DVB-I context) may constitute an example of a customization profile related to metadata language defined for requesting customized multimedia data.

Advantageously, the URL format specified in Section 6.5.3.1 of the DVB BlueBook A177r3 specification for a schedule request filtered with a service identifier and/or a now/next parameter may be used in one or more embodiments to define an identifier filter for customizing the request based on a metadata language as customization parameter.

For example, a schedule request (query) to a content guide server endpoint (of URL ScheduleInfoEndpoint) may in some embodiments be customized based on one or more customized metadata language parameters, such as for example one or more metadata language elements, through a customization filter (e.g. "MetadataLanguage=<metadataLanguage>") according to the following exemplary URL format:

```
        https://<ScheduleInfoEndpoint>?sid=<service_id>&now_next=<wind
 ow_type>&MetadataLanguage=<metadataLanguage>
```

In one or more embodiments, the schedule request (query) to a content guide server endpoint customized based on metadata language through a customization filter may further be filtered for one or more of a service identifier ("sid=<service_id>"), a set of events provided in addition to the current event ("now_next=<window_type>").

For example, a query to a content guide server endpoint customized for a service identifier "12345" and metadata in the "French" language may in some embodiments use the following URL formats:

```
        https://<ScheduleInfoEndpoint>?sid=12345&MetadataLanguage=Fren
 ch
```

As another example, a query to a content guide server endpoint customized for a service identifier "12345" and metadata in the "French", "German" or "English" languages may in some embodiments use the following URL formats:

```
        https://<ScheduleInfoEndpoint>?sid=12345&MetadataLanguage[]=Fr
 ench&MetadataLanguage[]=English&MetadataLanguage[]=German
```

In some embodiments, an improved DVB-I client may advantageously use the exemplary customization filter provided in the present subject disclosure to request from the content guide server endpoint multimedia data with one or more metadata languages customized based on the customization parameters indicated in the customization filter(s). In response, the DVB-I client may receive a XML document (Schedule Response) comprising resources for multimedia data that is customized based on the customization parameters indicated in the customization filter, possibly in a format similar to that described in Section 6.5.4 of the DVB-I Bluebook A177r4 document.

In one or more embodiments, embodiments of the proposed methods according to the present subject disclosure may be used for a type of customization related to accessibility.

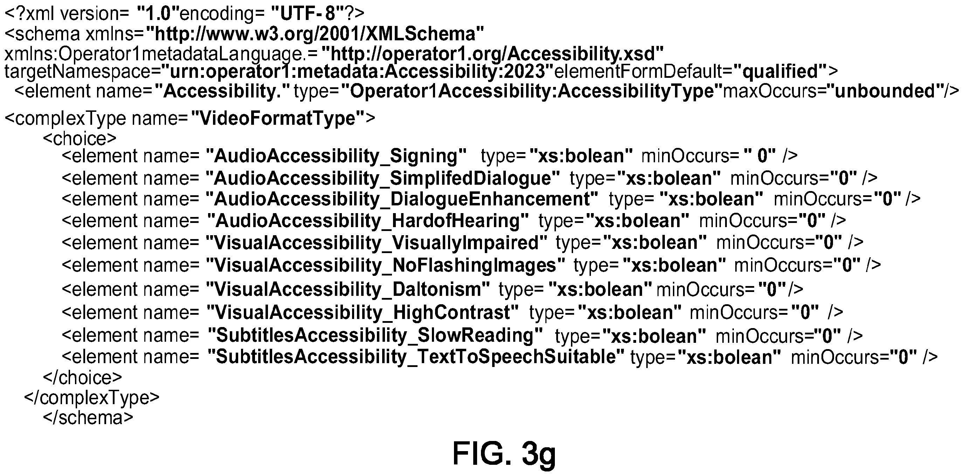

As shown on Fig. 3g, a "Accessibility.xsd" document may in some embodiments be used by a server device (e.g. an improved DVB-I server) to provide information on capabilities of the server device for serving queries (requests) for customized accessibility.

In one or more embodiments, a user device (e.g. an improved DVB-I client) may want to send to a server device (e.g. an improved DVB-I server) a query message for multimedia data which includes a parameter related to customization of multimedia data in relation to accessibility. In some embodiments, one or more accessibility customization parameters may be used to qualify any query so that metadata provided in response to the query matches the requested accessibility feature parameters.

An example of content of a "Accessibility.xsd" document is shown on Fig. 3g.

As shown on Fig. 3g, in one or more embodiments, the arguments of a query for customized accessibility features may include one or more values respectively corresponding to accessibility features. In some embodiments, a defined syntax for the customized query may provide that one or more accessibility feature elements chosen in a set of N_{AF} possible accessibility features (for example AudioAccessibility_Signing, AudioAccessibility_SimplifiedDialogue, AudioAccessibility_DialogueEnhancement, AudioAccessibility_HardoHearing, VisualAccessibility_Visuallylmpaired, VisualAccessibility_NoFlashinglmage, VisualAccessibility_Daltonism, VisualAccessibility_HighContrast, SubtitlesAccessibility_SlowReading, SubtitlesAccessibility_TextToSpeech) may be included in the request. Accordingly, in some embodiments, a server device (e.g. an improved DVB-I server) may be configured with capabilities to serve queries for customized accessibility feature(s) with one or more accessibility feature elements chosen in a set of N_{AF} possible accessibility features (for example AudioAccessibility_Signing, AudioAccessibility_SimplifiedDialogue, AudioAccessibility_DialogueEnhancement, AudioAccessibility_HardoHearing, VisualAccessibility_Visuallylmpaired, VisualAccessibility_NoFlashinglmage, VisualAccessibility_Daltonism, VisualAccessibility_HighContrast, SubtitlesAccessibility_SlowReading, SubtitlesAccessibility_TextToSpeech). In other words, in some embodiments, the server device (e.g. the improved DVB-I) server may provide information of support of customized accessibility queries where the customized accessibility feature(s) is defined by one or more accessibility feature elements.

As shown on Fig. 3g, the server device (e.g. the improved DVB-I server) may provide information related to its customization capabilities by defining the arguments that are supported for a query for customized accessibility feature(s). The definition of arguments that are supported by the server device may comprise one or more of: a definition of the type of arguments that are supported, definition of supported values for one or more types of arguments, and definition of a syntax of the query. In some embodiments, the server device (e.g. the improved DVB-I server) may provide information and/or the user device (e.g. the improved DVB-I client) may obtain information that any customized accessibility query presented to the server device should therefore indicate one or more accessibility feature values among predefined values.

For example, in some embodiments, the server device (e.g. improved DVB-I server) may be configured for rejecting, ignoring, or discarding any customized accessibility query that is not compliant with information provided in the Accessibility.xsd document, such as for example a customized accessibility query which requires an unsupported accessibility feature value, or else, depending on the embodiment, return an error message to the user device (e.g. improved DVB-I client) that originated the customized accessibility query.

In some embodiments, assuming that the customized accessibility query is for supported customized accessibility feature(s), the server device (e.g. the improved DVB-I server) may be configured for issuing a 200 (OK) HTTP response containing the requested customized multimedia data or resource to access such customized multimedia data. In the case where an unsupported customized accessibility feature is provided as customization parameter, the server device (e.g. the improved DVB-I server) may respond with an HTTP 400 (Bad Request) response. Alternatively, or in addition, the server device (e.g. the improved DVB-I server) may respond with data providing information for accessing a document which defines the supported syntax for customized accessibility queries (e.g. the Accessibility.xsd document of Fig. 3g).

The set of parameters defined for a customized accessibility feature usable in a request (a query in the DVB-I context) may constitute an example of a customization profile related to accessibility defined for requesting customized multimedia data.

Advantageously, the URL format specified in Section 6.5.3.1 of the DVB BlueBook A177r3 specification for a schedule request filtered with a service identifier and/or a now/next parameter may be used in one or more embodiments to define an identifier filter for customizing the request based on accessibility as customization parameter.

For example, a schedule request (query) to a content guide server endpoint (of URL ScheduleInfoEndpoint) may in some embodiments be customized based on one or more customized accessibility parameters, such as for example one or more accessibility feature elements (e.g. values), through a customization filter (e.g. "Accessibility=<accessibilityFeature>") according to the following exemplary URL formats:

```
        https://<ScheduleInfoEndpoint>?sid=<service_id>&now_next=<wind
 ow_type>&Accessibility=<accessibilityFeature>
```

In one or more embodiments, the schedule request (query) to a content guide server endpoint customized based on accessibility feature(s) through a customization filter may further be filtered for one or more of a service identifier ("sid=<service_id>"), a set of events provided in addition to the current event ("now_next=<window_type>").

For example, a query to a content guide server endpoint customized for a service identifier "12345" with either accessibility features "hard of hearing" and "visually impaired" or "subtitles with slow reading" may in some embodiments use the following URL format:

```
        https://<ScheduleInfoEndpoint>?sid=12345&
 &Accessibility[]=AudioAccessibility HardOfhearing=true&VisualAccessi
 bility_VisuallyImpaired=false&Accessibility[]=
 SubtitlesAccessibility SlowReading=true
```

In some embodiments, an improved DVB-I client may advantageously use the exemplary customization filter provided in the present subject disclosure to request from the content guide server endpoint multimedia data for one or more accessibility features customized based on the customization parameters indicated in the customization filter(s). In response, the DVB-I client may receive a XML document (Schedule Response) comprising resources for multimedia data that is customized based on the customization parameters indicated in the customization filter, possibly in a format similar to that described in Section 6.5.4 of the DVB-I Bluebook A177r4 document.

The present subject disclosure advantageously provides a scheme for a server to provide a client with data related to its customization capabilities. Depending on the embodiment, the server may provide such data to the client through signaling. Alternatively, or in addition, the client may also interrogate the server regarding its customization capabilities, for example through a request for customization capabilities.

For example, an improved DVB-I client may use a proposed method of the present subject disclosure to obtain data regarding image resolution parameters that are supported by an improved DVB-I server, so that it may avoid requesting from the DVB-I server that image processing (e.g. image scaling) according to customization parameters that are not supported by the DVB-I server (e.g. an unsupported width parameter).

Section 5.5.1 of the document "DVB-I Bluebook A177r4," dated September 2022 (« ServiceList ») defines a "ServiceList" information element that may be used in a XML instance document returned on interface B2 in response to a service list query. Section 5.5.1 of the document "DVB-I Bluebook A177r4" further defines a "ServiceType" element.

In one or more embodiments, the "ServiceList" information element (and corresponding Service List field) may be modified to include data related to customization capabilities of an improved DVB-I server according to embodiments of the present subject disclosure.

In one or more embodiments, an improved DVB-I server may provide data related to its customization capabilities through signaling of content guide metadata provided to a DVB-I client. Accordingly, the DVB-I server may provide an improved "ServiceList" information element that may be used in a XML instance document returned on interface B2 in response to a service list query.

In one or more embodiments, the improved "ServiceList" information element may be modified to include one or more customization capabilities parameters (for example called "CustomizationQuery" information elements) according to embodiments of the present subject disclosure.

For example, in some embodiments, the improved "ServiceList" information element (and corresponding Service List field) may include the following customization capability parameter for indicating a format in which a query for customer ID should be presented:

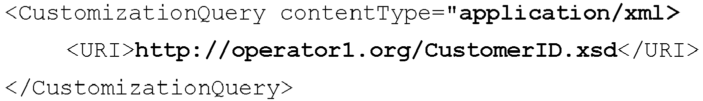

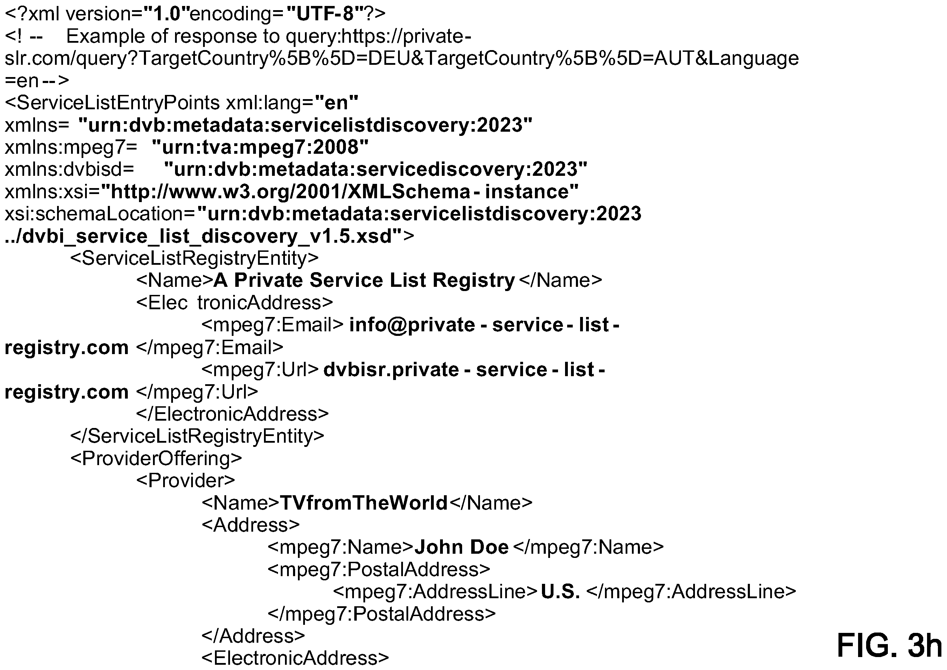

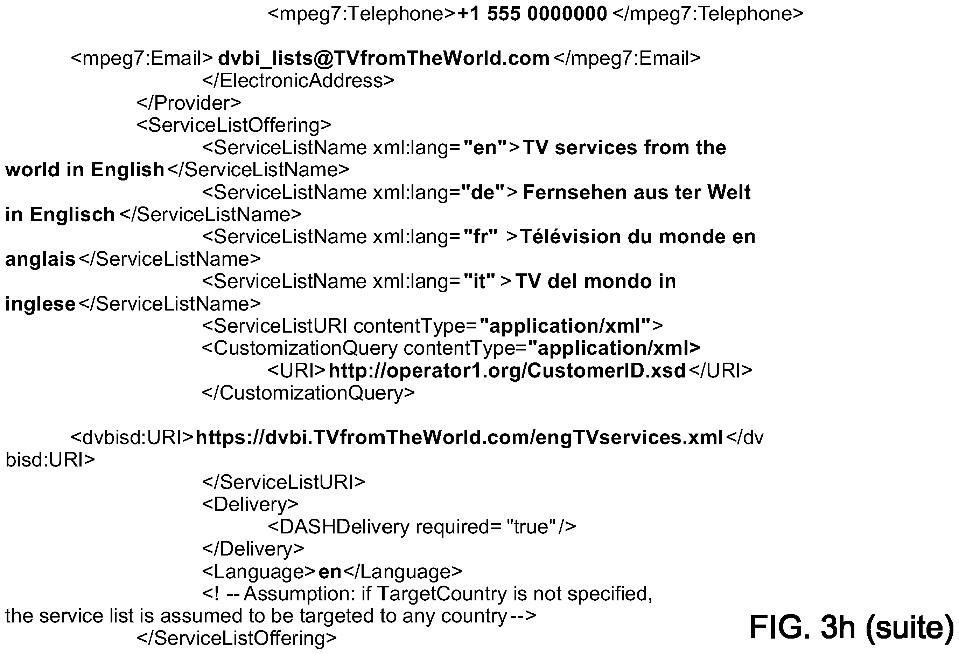

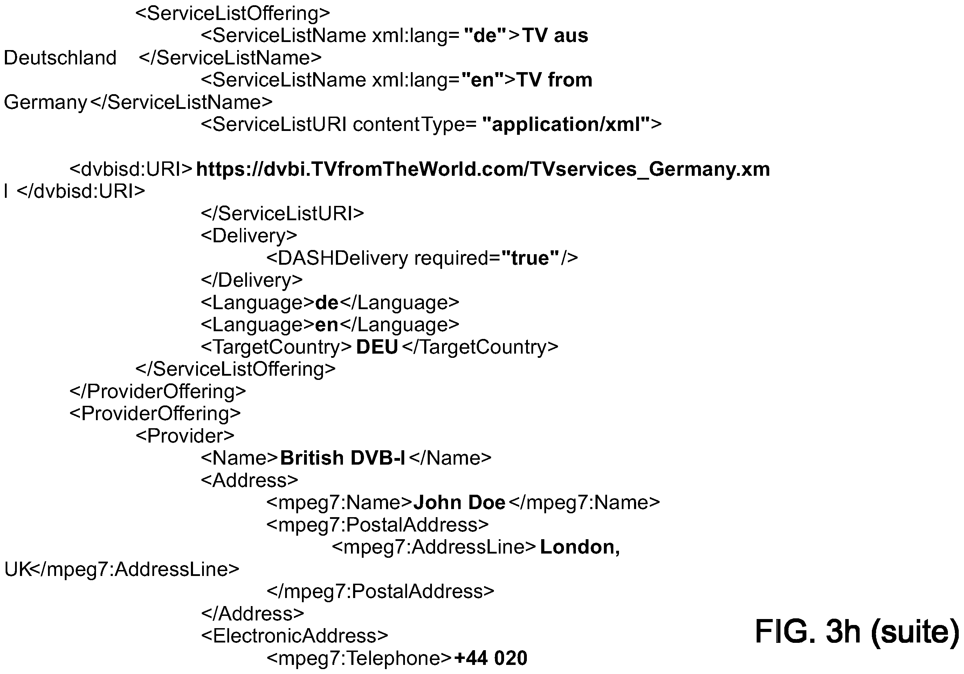

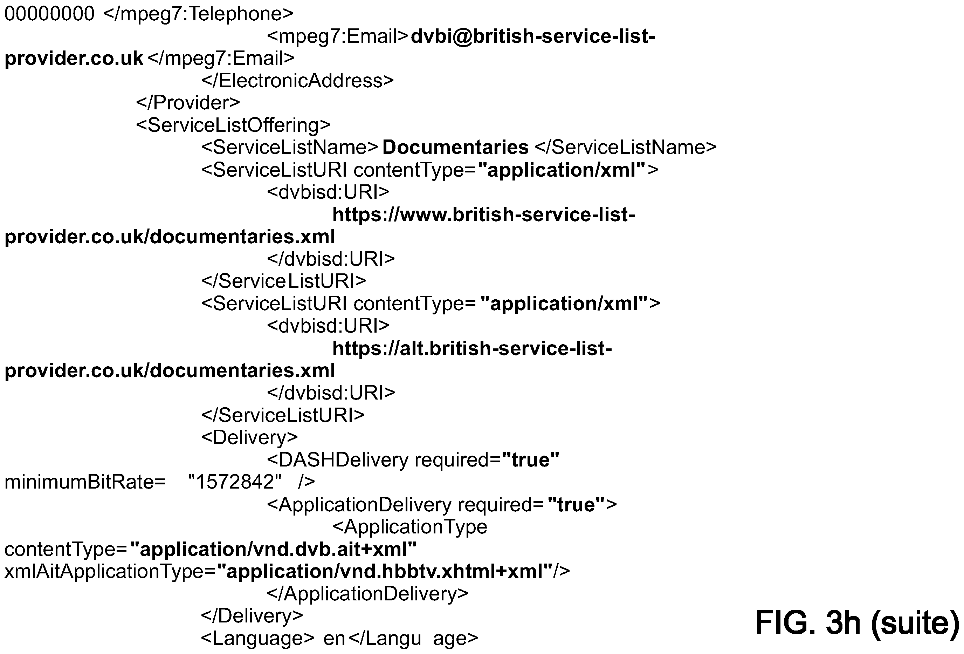

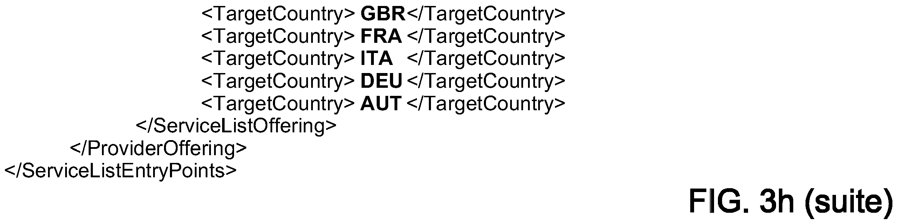

Fig. 3h shows an exemplary customized service list information element which includes customization capabilities parameters according to one or more embodiments.

The customized service list illustrated on Fig. 3h comprises the above-described customization capabilities parameter, in the form of a xsd document: <URI>http://operatorl.org/CustomerID.xsd</URI>.

The "CustomerlD.xsd" document provides information on the format of the customerlD query.

An example of content of a "CustomerlD.xsd" document is shown on Fig. 3b.

In one or more embodiments, the user device may be configured with an application, such as, for example, an Application Programming Interface (API) for obtaining data related to customization capabilities of a server device. For example, in the DVB-I context, in some embodiments, data related to customization capabilities of an improved DVB-I server may be obtained through use of a specific API for querying such data, instead of, or depending on the embodiment in addition to, through signaling, as described in connection with Figs. 3a - 3h.

For example, in some embodiments, the user device (e.g. an improved DVB-I client) may be configured with an API for sending a specific query to the server device in order to obtain data related to customization capabilities of a server device (e.g. an improved DVB-I server).

In some embodiments, the specific query may be of the form of a query to an HTTP endpoint, so that an improved DVB-I client wishing to retrieve data related to customization capabilities of a DVB-I server may query any suitable endpoint (e.g. the generic "api_endpoint_URL" defined in Section 6.2.2 of the DVB-I Bluebook A177r4 document) with one or more query parameters defined for requesting data related to customization capabilities of the DVB-I server. Depending on the embodiment, the "API_endpoint_URL" may correspond to any usable endpoint in the multimedia data delivery system, such as, in a DVB-I system, a content guide endpoint or a service list endpoint.

For example, the specific query may be of the following URL format:

```
        <api_endpoint_URL>?<capabilities_query_params>
```

where "api_endpoint_URL" is the queried endpoint, and "capabilities_query_params" are one or more query parameters for querying available data related to customization capabilities of the DVB-I server.

Depending on the embodiments, one or more capabilities query parameters may be used to query capabilities data regarding different types of customization or a combination thereof, such as for example, query capabilities data regarding one or more of image formats usable for queries, the format of a specific image that can be obtained, available customization based on user ID (or customer ID), etc.

Depending on the embodiments, the request for data related to customization capabilities may be sent to any server device of the multimedia data delivery system, so as to discover the specific capabilities of such server device regarding customization of delivered multimedia data.

In some embodiments, the specific query may be of the form of a query to a URL of the target server device, so that an improved DVB-I client wishing to retrieve data related to customization capabilities of a DVB-I server may query the DVB-I server with one or more query parameters defined for requesting data related to customization capabilities of the DVB-I server.

For example, the specific query may be of the following URL format:

```
        <api_server_URL>?<capabilities_query_params>
```

where "api_server_URL" is the queried server, and "capabilities_query_params" are one or more query parameters for querying available data related to customization capabilities of the DVB-I server.

Therefore, depending on the embodiments, the request for data related to customization capabilities may have various scopes and may be presented at nodes corresponding to various hierarchical levels of the multimedia data delivery system (for example an endpoint, a server, such as a TV channel server).

For example, in a DVB-I context, depending on the embodiment, the request for data related to customization capabilities may be sent to nodes of the multimedia data delivery system providing data at different levels of the hierarchical levels described in Section 5.1.4 of the DVB-I Bluebook A177r4 document, such as to one or more of a Service List Registry, a Service List, and a Service.

In one or more embodiments, the server device may be configured for, upon receipt of the specific query, returning data related to its customization capabilities to the user device, for example in the form of data included in a document (e.g. a manifest file, for example a DASH manifest file, or a playlist) returned to the user device. Depending on the embodiment, the document returned to the user device may be a xsd document (in which case the document may list all elements associated with endpoints), a yaml document (in which case the document may list all possible query elements and corresponding syntaxes associated with endpoints, or a xml capabilities documents that includes profiles (defined in a specific document).

In one or more embodiments, the server device may be configured to process a request for customization capabilities received from the user device, which may comprise determining whether the syntax of the request is correct. In some embodiments, the server device may further be configured to respond to the request with an error message (e.g. return a 400 (bad Request) HTTP response status) in case where it is determined that the syntax of the request is not correct.

In some embodiments, even though the syntax of the request is determined to be correct, the server device may further be configured to also respond to the request with an error message (e.g. return a 400 (bad Request) HTTP response status) in case it has no customization capabilities to share with the user device in response to the request. At the user device end, receiving an error message in response to the request may be interpreted as indicating that the server device has no customization capabilities.

In other embodiments, in case the syntax of the request is determined to be correct, the server device may further be configured to not respond to the request in case it has no customization capabilities to share with the user device in response to the request. At the user device end, the lack of response to the request may be interpreted as indicating that the server device has no customization capabilities.

In one or more embodiments, the server device may be configured to receive from the user device a request for customization capabilities, and process such request as a request for all customization capabilities of the server device. In one or more embodiments, the server device may be configured for returning, in response to the request for customization capabilities, data related to all customization capabilities of the server device. In some embodiments, the data related to customization capabilities returned by the server device in response to the request received from the user device may comprise data related to supporting one or more supported types of customization capabilities (e.g. types of customization such as image format, customer ID, etc.). In some embodiments, the data related to customization capabilities returned by the server device in response to the request received from the user device may comprise data related to all supported types of customization capabilities.

In one or more embodiments, the request for customization capabilities may comprise one or more of customization parameters and types of customization parameters. That is, the request for customization capabilities may specify one or more of customization parameters and types of customization parameters to which the request pertains.

In one or more embodiments, the request for customization capabilities may have a scope limited to one or more types of customization (e.g. customization based on image format, based on customer ID, etc.). For example, a request for customization capabilities for customization based on image format may have the following form:

```
        <api_endpoint_URL>?<capabilities_image_format>
```

For example, a request for customization capabilities for customization based on customer ID (login ID) may have the following form:

```
        <api_endpoint_URL>?<capabilities_login>
```

For example, a request for customization capabilities for customization based on image format and for customization based on customer ID (login ID) may have the following form:

```
        <api_endpoint_URL>?<capabilities_image_format>?<capabilities_l
 ogin>
```

or:

```
        <api_endpoint_URL>?<capabilities_image_format>&<capabilities_l
 ogin>
```

In one or more embodiments, the server device may be configured for returning, in response to the request for customization capabilities, capabilities data related to one or more of the parameters included in the request. For example, the server device may be configured for responding with data related to its capabilities for one or more types of capabilities indicated in the request for which the server device supports customization, and for not responding for one or more types of capabilities indicated in the request for which the server device does not support customization. This advantageously allows addressing in a single request-response exchange between the client device and the server device various customization parameters of potentially different types. The server device may therefore cover in the response, in part or in full, the scope of the request with respect to the different parameters (customization parameters and/or types of customization parameters) that may be included in the received request, to the extent of its customization capabilities.

For example, in a case where the request for customization capabilities includes one or more customization parameters related to image format (e.g. image length and/or image width), and one or more customization parameters related to a customer ID (e.g. for requests customized with a specific login ID), the response may include data related to customization capabilities for one or more of the customization parameters related to image format and the customization parameters related to a customer ID.

In some embodiments, assuming that the server device receives a request for customization capabilities that specifies a first type of customization and a second type of customization, in a case where the server device supports customization based on the first type of customization, and does not support customization based on the second type of customization, the server device may respond by transmitting to the user device data related to its capabilities for the first type of customization, and may not respond to the request regarding capabilities the second type of customization. For example, in a case where the server device supports customization based on image format, and does not support customization based on customer ID, the server device may respond by transmitting to the user device data related to its capabilities for customization based on image format, and may not respond to the request regarding capabilities for customization based on customerlD. For example, the response to a request in the form of:

```
        <api_endpoint_URL>?<capabilities_image_format>?<capabilities_l
 ogin>
```

may consist of a single document covering the scope of the request, for example comprising customization capabilities data for all of the types of customization included in the request to the extent supported by the server device: image format and customer ID, as described in the present subject disclosure in connection with Figs. 3a - 3c.

In some embodiments, the specific query may be presented to a server configured for storing data related to customization capabilities of server devices of the multimedia data delivery system (referred to herein as the "customization server"), and the response including data related to customization capabilities of the server device may be provided by the customization server to the user device.

In one or more embodiments, a user device that intends to send a request for customized multimedia data to a server device may, prior to sending the request for customized multimedia data to the server device, send (depending on the embodiment, to the server device or to a customization server) a request for data related to customization capabilities of the server device (which may interchangeably be referred to as a "request for customization capabilities" in the present subject disclosure). For example, in the DVB-I context, an improved DVB-I client that intends to send a request for customized multimedia data to a DVB-I server may first send (e.g. to the DVB-I server) a query for data related to customization capabilities of the DVB-I server. For example, the DVB-I client may send a query of the form <CustomizationEndpoint>?capabilities to the DVB-I server.

In some embodiments, in case the user device receives an error message (e.g. if the DVB-I client receives an "HTTP Bad Request" response), the user device may determine that the server device has no customization capabilities, and cannot handle any request for customized multimedia data.

In some embodiments, in case the user device receives a response providing data related to customization capabilities of the server device (for example, depending on the embodiment, data comprising a xsd document, a yaml document or a xml capabilities document), the user device may determine that requests for customized multimedia data are enabled at the server device.

In some embodiments, further to the determination that requests for customized multimedia data are enabled at the server device, the user device may verify that it supports the generation of query messages for customized multimedia data (that include a parameter related to customization of multimedia data) based on data related to customization capabilities of the server device. For example, the data related to customization capabilities of the server device obtained by the user device may comprise one or more customization profiles requested by the server device in relation to query messages for customized multimedia data, and the user device may verify that it supports the generation of query messages for customized multimedia data (that include a parameter related to customization of multimedia data) based on one or more of the customization profiles requested by the server device.

In one or more embodiments wherein the server device (or, depending on the embodiment, a customization server) receives, from the user device, a request for data related to customization capabilities of the server device, the data related to customization capabilities of the server device may be transmitted by the recipient server as a response to the received request.

In one or more embodiments, the response may comprise a response document, such as for example a XML response document which includes a list of one or more types of queries for customized multimedia data that are supported by the server device, possibly with information related to definition of each type of query (defining one or more of a format, syntax, attributes, information elements, mandatory vs. optional, etc.).

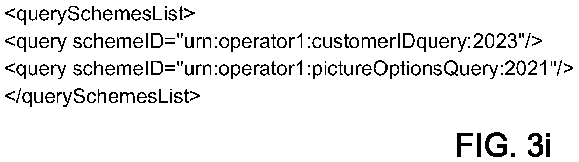

Fig. 3i shows an exemplary XML response document list capabilities of a server device according to one or more embodiments.

As shown on Fig. 3i, the server device may implement a HTTP endpoint which supports two types of queries for customized multimedia data: queries for an image with a customized format ("pictureOptionsQuery"), and queries for a customer identifier (ID) ("CustomerIDquery").

Further, the exemplary response document of Fig. 3i provides information that the HTTP endpoint supports the two types of queries for customized multimedia data, each as defined by an operator ("operatorl").

In one or more embodiments, information related to a definition of each type of query listed in the response document of Fig. 3i (e.g. definition of one or more of allowable syntax and allowable values (or ranges of values)) may be specified in a document separate from the response document of Fig. 3i.

In one or more embodiments, one or more customization profiles may be predefined, so that the server device may provide information to the user device, possibly upon request, that it supports one or more customization profiles of the predefined customization profiles. A customization profile may for example be defined in relation to a corresponding type of customization parameter, such as image format, customer (user) ID, etc.

In such embodiments, the data related to customization capabilities of the server device transmitted to the user device may comprise a list of one or more customization profiles that are supported by the server device.

In some embodiments, defining a customization profile corresponding to a type of customization parameter may comprise defining one or more of allowable syntax and allowable values (or range of values) that can be used for customizing a query message based on one or more customization parameters of the corresponding type.

For example, in the case where the type of customization parameter relates to the image format, a customization profile for customizing a request for image data may be defined by defining an allowable syntax for a request for image data (including allowable customization parameters such as image length and image width), possibly together with allowable values for one or more of the defined customization parameters, such as discussed above in connection with Fig. 3c.

As another example, in the case where the type of customization parameter relates to customization based on an identifier, a customization profile for customizing a request based on an identifier (e.g. a login) may be defined by defining an allowable syntax for a request for multimedia data customized based on an identifier (including allowable customization parameters such as login), possibly together with allowable values (or range of values) for one or more of the defined customization parameters, such as discussed above in connection with Fig. 3b.

Therefore, advantageously, in some embodiments, the server device may provide data regarding its customization capabilities via one or more predefined profiles usable in the multimedia data delivery system.

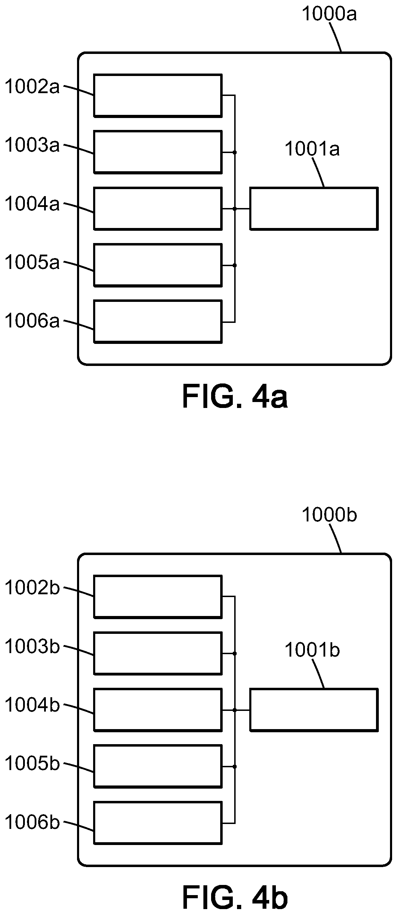

Fig. 4a illustrates an exemplary apparatus 1000a configured to use a multimedia data delivery feature in accordance with embodiments of the present subject disclosure. The apparatus 1000a may, depending on the embodiment, be comprised in a server node of a multimedia content distribution network, in a server platform which comprises one or more servers (which may be cloud-based), or in a DVB-I server unit of a server node of a multimedia content distribution network, or of a server platform.

The apparatus 1000a, which may comprise one or more computers, includes a control engine 1001a, a query processing engine 1002a, a data interface engine 1003a, a response processing engine 1004a, a customization management engine 1005a, and a memory 1006a.

In the architecture illustrated on Fig. 4a, all of the query processing engine 1002a, data interface engine 1003a, response processing engine 1004a, and memory 1006a are operatively coupled with one another through the control engine 1001a.

In one or more embodiments, the customization management engine 1005a may be configured to perform various functions or embodiments provided in the present subject disclosure of the proposed method for delivering multimedia data to a user device of a multimedia data delivery system as described herein, including with respect to transmitting, to a user device, data related to customization capabilities of the server device. In some embodiments, the customization management engine 1005a may be implemented in software and incorporated in a computing machine running on a server device, for example in one or more of a DVB-I Service List Registry function and DVB-I Service List Server function implemented on a DVB-I server, configured according to embodiments of the present subject disclosure.

In one or more embodiments, the query processing engine 1002a may be configured to perform various functions or embodiments provided in the present subject disclosure of the proposed method for delivering multimedia data to a user device of a multimedia data delivery system as described herein, including with respect to receiving, from a user device, a query message for multimedia data which includes a parameter related to customization of multimedia data. In some embodiments, the query processing engine 1002a may be implemented in software and incorporated in a computing machine running on a server device, for example in a DVB-I Server function (such as, for example in one or more of a DVB-I Service List Registry function and DVB-I Service List Server function) implemented on a DVB-I server, configured according to embodiments of the present subject disclosure.

In one or more embodiments, the response processing engine 1004a may be configured to perform various functions or embodiments provided in the present subject disclosure of the proposed method for delivering multimedia data to a user device of a multimedia data delivery system as described herein, including with respect to generating, upon receiving a query message that includes a parameter related to customization of multimedia data, a response message which includes multimedia data customized based on the parameter and the customization capabilities of the server device, for transmission to the user device. In some embodiments, the response processing engine 1004a may be implemented in software and incorporated in a computing machine running on a server device, for example in a DVB-I Server function (such as, for example in one or more of a DVB-I Service List Registry function and DVB-I Service List Server function) implemented on a DVB-I server, configured according to embodiments of the present subject disclosure.

In some embodiments, the data interface engine 1003a is configured to receive as input data query messages from one or more user devices, and for transmitting response messages to the one or more user devices.

The control engine 1001a includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 1001a may also comprise, or may be in communication with, computer storage media, such as, without limitation, the memory 1006a, capable of storing computer program instructions or software code that, when executed by the processor, causes the processor to perform the elements described herein. In addition, the memory 1006a may be any type of data storage computer storage medium, capable of storing multimedia content data, service data, service list data, customization data, personalization data and/or channel data for use according to one or more embodiments of the present subject disclosure, coupled to the control engine 1001a and operable with the data interface engine 1003a, the response processing engine 1004a, the customization management engine 1005a, and the query processing engine 1002a to facilitate management and processing of resource data stored in association therewith.

In embodiments of the present subject disclosure, the apparatus 1000a is configured for performing the computational resource allocation methods described herein.

It will be appreciated that the apparatus 1000a shown and described with reference to Fig. 4a is provided by way of example only. Numerous other architectures, operating environments, and configurations are possible. Other embodiments of the node may include fewer or greater number of components, and may incorporate some or all of the functionality described with respect to the apparatus components shown in Fig. 4a. Accordingly, although the control engine 1001a, query processing engine 1002a, data interface engine 1003a, response processing engine 1004a, customization management engine 1005a, and memory 1006a are illustrated as part of the apparatus 1000a, no restrictions are placed on the location and control of components 1001a - 1006a. In particular, in other embodiments, components 1001a - 1006a may be part of different entities or computing systems.

Fig. 4b illustrates an exemplary apparatus 1000b configured to use a multimedia data delivery management feature in accordance with embodiments of the present subject disclosure. The apparatus 1000b may, depending on the embodiment, be comprised in a user device of a multimedia content distribution network, in a player implemented on such a user device, or in an improved DVB-I client implemented on a user device (e.g. on the player of a user device) of a multimedia content distribution network.

The apparatus 1000b, which may comprise one or more computers, includes a control engine 1001b, query generation engine 1002b, a data interface engine 1003b, a response processing engine 1006b, a customization management engine 1005a, and a memory 1004b.

In the architecture illustrated on Fig. 4b, all of the query generation engine 1002b, data interface engine 1003b, response processing engine 1006b, customization management engine 1005a, and memory 1004b are operatively coupled with one another through the control engine 1001b.

In one or more embodiments, the customization management engine 1005a may be configured to perform various functions or embodiments provided in the present subject disclosure of the proposed method for managing delivery of multimedia data to a user device of a multimedia data delivery system as described herein, including with respect to obtaining data related to customization capabilities of a server device of the multimedia data delivery system. In some embodiments, the customization management engine 1005a may be implemented in software and incorporated in a computing machine running on a user device, for example in an improved DVB-I client implemented on a user device, configured according to embodiments of the present subject disclosure.

In one or more embodiments, the query generation engine 1002b may be configured to perform various functions or embodiments provided in the present subject disclosure of the proposed method for managing delivery of multimedia data to a user device of a multimedia data delivery system as described herein, including with respect to generating, based on the obtained data related to customization capabilities of the server device, a query message for multimedia data, which query message includes a parameter related to customization of multimedia data. In some embodiments, the query generation engine 1002b may be implemented in software and incorporated in a computing machine running on a user device, for example in an improved DVB-I client implemented on a user device, configured according to embodiments of the present subject disclosure.

In one or more embodiments, the response processing engine 1006b may be configured to perform various functions or embodiments provided in the present subject disclosure of the proposed method for managing delivery of multimedia data to a user device of a multimedia data delivery system as described herein, including with respect to receiving, from a server device, a response message which includes multimedia data customized according to the parameter, and processing the received list. In some embodiments, the response processing engine 1006b may be implemented in software and incorporated in a computing machine running on a user device, for example in an improved DVB-I client implemented on a user device, configured according to embodiments of the present subject disclosure.

In some embodiments, the data interface engine 1003b is configured to transmit query messages generated by the query generation engine 1002b to a server device, and to receive response messages in response to transmitted query messages.

The control engine 1001b includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 1001b may also comprise, or may be in communication with, computer storage media, such as, without limitation, the memory 1004b, capable of storing computer program instructions or software code that, when executed by the processor, causes the processor to perform the elements described herein. In addition, the memory 1006a may be any type of data storage computer storage medium, capable of storing multimedia content data, service data, service list data, customization data, personalization data and/or channel data for use according to one or more embodiments of the present subject disclosure, coupled to the control engine 1001b and operable with the data interface engine 1003b, the response processing engine 1006b, the customization management engine 1005a, and the query generation engine 1002b, to facilitate management and processing of resource data stored in association therewith.

In embodiments of the present subject disclosure, the apparatus 1000b is configured for performing the computational resource allocation methods described herein.

It will be appreciated that the apparatus 1000b shown and described with reference to Fig. 4b is provided by way of example only. Numerous other architectures, operating environments, and configurations are possible. Other embodiments of the node may include fewer or greater number of components, and may incorporate some or all of the functionality described with respect to the apparatus components shown in Fig. 4b. Accordingly, although the control engine 1001b, query generation engine 1002b, customization management engine 1005a, data interface engine 1003b, response processing engine 1006b, and memory 1004b are illustrated as part of the apparatus 1000b, no restrictions are placed on the location and control of components 1001b - 1004b. In particular, in other embodiments, components 1001b - 1004b may be part of different entities or computing systems.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for delivering multimedia data to a user device of a multimedia data delivery system, the method comprising:
transmitting, to the user device, data related to customization capabilities of a server device of the multimedia data delivery system;
receiving, by the server device, a query message for multimedia data from the user device, wherein the query message includes a parameter related to customization of multimedia data; and
upon receiving the query message, generating, by the server device, a response message which includes multimedia data customized based on the parameter and the customization capabilities of the server device, for transmission to the user device.

2. The method of claim 1, further comprising: transmitting, to the user device, the response message.

3. The method of any of claims 1 and 2, further comprising: receiving, from the user device, a request for customization capabilities of the server device, wherein the data related to customization capabilities are transmitted to the user device in response to the request.

4. The method of any of claims 1 to 3, wherein the data related to customization capabilities are transmitted through signaling transmitted to the user device.

5. A method for managing delivery of multimedia data to a user device of a multimedia data delivery system, the method comprising, by the user device,
obtaining data related to customization capabilities of a server device of the multimedia data delivery system;
based on the data related to customization capabilities of the server device, generating a query message for multimedia data, wherein the query message includes a parameter related to customization of multimedia data; and
transmitting the query message to the server device.

6. The method of claim 5, further comprising: receiving, from the server device, a response message which includes multimedia data customized according to the parameter.

7. The method of any of claims 5 and 6 further comprising: transmitting, to the server device, a request for customization capabilities of the server device, wherein obtaining the data related to customization capabilities of the server device comprises: receiving the data related to customization capabilities in response to the request.

8. The method of any of claims 5 to 7, wherein the data related to customization capabilities are obtained through signaling transmitted to the user device by the server device.

9. The method of any of claims 5 to 8, wherein the data related to customization capabilities are obtained through response to the user device by the server device to a request by the user device to the server on customization capabilities.

10. The method of any of the preceding claims, wherein the data related to customization capabilities of the server device comprises one or more of a customization profile supported by the server device to be used for a query for customized multimedia data.

11. The method of any of the preceding claims, wherein the parameter related to customization of multimedia data relates to one or more of: an image format, an identifier, a video format, a content language, a metadata language, and accessibility.

12. The method of any of the preceding claims, wherein the multimedia data delivery system includes a Digital Video Broadcasting - Internet, DVB-I, system, and the query message is a DVB-I query.

13. The method of any of the preceding claims, wherein the user device implements a Digital Video Broadcasting - Internet, DVB-I, client, and the query message is a DVB-I query.

14. An apparatus, the apparatus comprising a processor and a memory operatively coupled to the processor, wherein the apparatus is configured to perform a method according to any of claims 1 to 13.

15. A computer program product comprising computer program code tangibly embodied in a computer readable medium, said computer program code comprising instructions to, when provided to a computer system and executed, cause said computer to perform a method according to any of claims 1 to 13.
